(19) **Europäisches Patentamt European Patent Office Office européen des brevets**

(11) **EP 4 668 967 A1**

(12) **EUROPEAN PATENT APPLICATION**
published in accordance with Art. 153(4) EPC

(43) Date of publication:
**24.12.2025 Bulletin 2025/52**

(21) Application number: **23922045.2**

(22) Date of filing: **17.02.2023**

(51) International Patent Classification (IPC):
*H04W 72/21* (2023.01)

(52) Cooperative Patent Classification (CPC):
**H04W 72/21**

(86) International application number:
**PCT/CN2023/076985**

(87) International publication number:
**WO 2024/168914 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventor: **GAO, Xueyuan**
**Beijing 100085 (CN)**

(74) Representative: **Dehns Germany Partnerschaft mbB**
**Theresienstraße 6-8**
**80333 München (DE)**

(54) **PHYSICAL UPLINK SHARED CHANNEL TRANSMISSION METHOD AND APPARATUS, AND STORAGE MEDIUM**

(57)    The present disclosure relates to a physical uplink shared channel (PUSCH) transmission method and apparatus, and a storage medium. The PUSCH transmission method is executed by a terminal, and the method comprises: determining a transmission mode of an SFN; and on the basis of an SRS resource set indication domain in an SCI, performing PUSCH transmission based on a single TRP or performing PUSCH transmission based on a multi-TRP SFN mode. Therefore, dynamic switching between a single TRP and multiple TRPs is suitably adapted to different terminals.

S11
determining that the PUSCH configuration uses a single frequency network (SFN) transmission mode

S12
based on the first indication field in the DCI, performing a single-TRP PUSCH transmission or a multi-TRP PUSCH transmission in the SFN transmission mode

Fig. 5

**Description**

TECHNICAL FIELD

The present disclosure relates to the field of communication technologies, and in particular to a physical uplink shared channel transmission method, apparatus, device, and storage medium.

BACKGROUND

The physical uplink shared channel (PUSCH) transmission may be sent to the transmission reception points (TRPs) on multiple network devices.

Related technologies employ time division multiplexing (TDM) to enable the terminal to send PUSCH transmissions to multiple TRPs. However, the terminal using TDM are not required to be able to transmit beams simultaneously. In other words, the terminal may have only a single antenna panel.

For the terminal with multiple antenna panels, how to dynamically switch between a single-TRP mode and a multi-TRP mode is still under discussion.

SUMMARY

In order to overcome the problems existing in the related art, the present disclosure provides a PUSCH transmission method, apparatus, device, and storage medium.

According to a first aspect of the embodiments of the present disclosure, a PUSCH transmission method is provided, the method being performed by a terminal that supports simultaneous uplink transmission with multiple antenna panels (STxMPs). The method includes: determining that a PUSCH configuration uses a single frequency network (SFN) transmission mode; and based on a first indication field for sounding reference signal (SRS) in downlink control information (DCI), performing a single-transmission reception point (TRP) PUSCH transmission or a multi-TRP PUSCH transmission in the SFN transmission mode. The single-TRP PUSCH transmission includes a PUSCH transmission directed to a single TRP via a single antenna panel. The multi-TRP PUSCH transmission in the SFN transmission includes a PUSCH transmission directed to different TRPs respectively via multiple antenna panels in the SFN transmission mode. The first indication field is used to indicate an association between a second indication field and a sounding reference signal (SRS) resource set in the SFN transmission mode, and to indicate an association between the second indication field and a TRP and/or a transmission configuration indicator (TCI) state in the SFN transmission mode.

In an embodiment, the second indication field includes a first resource indication field, the SRS resource set includes the first SRS resource set and the second SRS resource set, the maximum number of transmission layers corresponding to the single-TRP mode is the same as the maximum number of transmission layers corresponding to the SFN transmission mode, and the first SRS resource set or the second SRS resource set is associated with the first resource indication field.

In an embodiment, the codepoint corresponding to the first indication field is used to indicate an association between the second indication field and the SRS resource set, and an association between the second indication field and the TRP and/or TCI state in the SFN transmission mode.

In an embodiment, the TRP includes a first TRP and a second TRP, the TCI state includes a first TCI state and a second TCI state, and the codepoint is used to indicate at least one of the following associations: the codepoint is a first codepoint, indicating that the first resource indication field is associated with the first SRS resource set, and that the first resource indication field is associated with the first TPR and/or the first TCI state; the codepoint is a second codepoint, indicating that the first resource indication field is associated with the second SRS resource set, and that the first resource indication field is associated with the second TPR and/or the second TCI state; the codepoint is a third codepoint, indicating that the first resource indication field is associated with the first SRS resource set, that the first resource indication field is associated with the first TPR and/or the first TCI state, that the second resource indication field is associated with the second SRS resource set, and that the second resource indication field is associated with the second TPR and/or the second TCI state; the codepoint is a fourth codepoint, where the fourth codepoint is a reserved codepoint.

In an embodiment, the TRP includes a first TRP and a second TRP, the TCI state includes a first TCI state and a second TCI state, and the codepoint is used to indicate at least one of the following associations: the codepoint is a first codepoint, indicating that the first resource indication field is associated with the first SRS resource set, and that the first resource indication field is associated with the first TPR and/or the first TCI state; the codepoint is a second codepoint, indicating that the first resource indication field is associated with the second SRS resource set, and that the first resource indication field is associated with the second TRP and/or the second TCI state; the codepoint is a third codepoint, indicating that the first resource indication field is associated with the first SRS resource set, that the first resource indication field is associated with the first TPR and/or the first TCI state, that the second resource indication field is associated with the second SRS resource set, and that the second resource indication field is associated with the second TRP and/or the second TCI state; the codepoint is a fourth codepoint, indicating that the first resource indication field is associated with the first SRS resource set, that the first resource indication field is associated with the second TPR and/or the second TCI state, that the second resource indication field is associated with the second SRS resource set, and that the second resource indication field is associated with the first TRP and/or the first TCI state.

In an embodiment, the number of SRS resources corresponding to the first SRS resource set is greater than or equal to the number of SRS resources corresponding to the second SRS resource set.

In an embodiment, the second indication field includes a first resource indication field and a second resource indication field, the SRS resource set includes the first SRS resource set and the second SRS resource set, the maximum number of transmission layers corresponding to the single-TRP mode is different from the maximum number of transmission layers corresponding to the SFN transmission mode, the first SRS resource set or the second SRS resource set is associated with the first resource indication field; or, the first SRS resource set is associated with both the first resource indication field and the second resource indication field; or, the second SRS resource set is associated with both the first resource indication field and the second resource indication field.

In an embodiment, the maximum number of transmission layers corresponding to the single-TRP mode and the maximum number of transmission layers corresponding to the SFN transmission mode are determined based on a preset rule or protocol specification; or, the maximum number of transmission layers corresponding to the SFN transmission mode is determined based on the preset rule or protocol specification, and the maximum number of transmission layers corresponding to the single-TRP mode and the maximum number of transmission layers corresponding to the SFN transmission mode are the same.

In an embodiment, the first SRS resource set or the second SRS resource set is associated with a first resource indication field; the codepoint corresponding to the first resource indication field is adapted to the maximum number of transmission layers corresponding to the single-TRP mode and the maximum number of transmission layers corresponding to the SFN transmission mode.

In an embodiment, the maximum number of transmission layers corresponding to the SFN transmission mode is 2.

In an embodiment, the maximum number of transmission layers corresponding to the SFN transmission mode is greater than 2.

In an embodiment, the PUSCH transmission is based on a non-codebook basis, and the second indication field is a SRS Resource Indicator (SRI) indication field; the PUSCH transmission is based on a codebook basis, and the second indication field is the SRI indication field and/or the Transmission Precoding Matrix Indicator (TPMI) indication field.

According to a second aspect of the embodiments of the present disclosure, a PUSCH transmission method is provided. The method is performed by a network device that supports simultaneous uplink transmission with multiple antenna panels (STxMPs). The method includes: determining that a PUSCH configuration uses a single frequency network (SFN) transmission mode; and performing a single-transmission reception point (TRP) PUSCH reception or a multi-TRP PUSCH reception in the SFN transmission mode based on a first indication field in downlink control information (DCI). The single-TRP PUSCH reception includes the PUSCH reception directed to a single antenna panel via a single TRP. The multi-TRP PUSCH reception in the SFN transmission mode includes the PUSCH reception directed to different TRPs respectively via multiple antenna panels in the SFN transmission mode. The first indication field is used to indicate an association between the second indication field and the sounding reference signal (SRS) resource set in the SFN transmission mode, and to indicate an association between the second indication field and the TRP and/or the transmission configuration indicator (TCI) state in the SFN transmission mode.

In an embodiment, the second indication field includes a first resource indication field, the SRS resource set includes the first SRS resource set and the second SRS resource set, the maximum number of transmission layers corresponding to the single-TRP mode is the same as the maximum number of transmission layers corresponding to the SFN transmission mode, and the first SRS resource set or the second SRS resource set is associated with the first resource indication field.

In an embodiment, the codepoint corresponding to the first indication field is used to indicate the association between the second indication field and the SRS resource set, and to indicate the association between the second indication field and the TRP and/or TCI state in the SFN transmission mode.

In an embodiment, the TRP includes a first TRP and a second TRP, the TCI state includes a first TCI state and a second TCI state, and the codepoint is used to indicate at least one of the following associations: the codepoint is a first codepoint, indicating that the first resource indication field is associated with the first SRS resource set, and that the first resource indication field is associated with the first TPR and/or the first TCI state; the codepoint is a second codepoint, indicating that the first resource indication field is associated with the second SRS resource set, and that the first resource indication field is associated with the second TPR and/or the second TCI state; the codepoint is a third codepoint, indicating that the first resource indication field is associated with the first SRS resource set, that the first resource indication field is associated with the first TPR and/or the first TCI state, that the second resource indication field is associated with the second SRS resource set, and that the second resource indication field is associated with the second TPR and/or the second TCI state; the codepoint is a fourth codepoint, where the fourth codepoint is a reserved codepoint.

In an embodiment, the TRP includes a first TRP and a second TRP, the TCI state includes a first TCI state and a second TCI state, and the codepoint is used to indicate at least one of the following associations: the codepoint is a first codepoint, indicating that the first resource indication field is associated with the first SRS resource set, and that the first resource indication field is associated with the first TPR and/or the first TCI state; the codepoint is a second codepoint, indicating that the first resource indication field is associated with the second SRS resource set, and that the first resource indication field is associated with the second TRP and/or the second TCI state; the codepoint is a third codepoint, indicating that the first resource indication field is associated with the first SRS resource set, that the first resource indication field is associated with the first TPR and/or the first TCI state, that the second resource indication field is associated with the second SRS resource set, and that the second resource indication field is associated with the second TRP and/or the second TCI state; the codepoint is a fourth codepoint, indicating that the first resource indication field is associated with the first SRS resource set, that the first resource indication field is associated with the second TPR and/or the second TCI state, that the second resource indication field is associated with the second SRS resource set, and that the second resource indication field is associated with the first TRP and/or the first TCI state.

In an embodiment, the number of SRS resources corresponding to the first SRS resource set is greater than or equal to the number of SRS resources corresponding to the second SRS resource set.

In an embodiment, the second indication field includes a first resource indication field and a second resource indication field, and the SRS resource set includes the first SRS resource set and the second SRS resource set. The maximum number of transmission layers corresponding to the single-TRP mode is different from the maximum number of transmission layers corresponding to the SFN transmission mode. The first SRS resource set or the second SRS resource set is associated with the first resource indication field; or the first SRS resource set is associated with both the first resource indication field and the second resource indication field; or the second SRS resource set is associated with both the first resource indication field and the second resource indication field.

In an embodiment, the maximum number of transmission layers corresponding to the single-TRP mode and the maximum number of transmission layers corresponding to the SFN transmission mode are determined based on a preset rule or protocol specification; or the maximum number of transmission layers corresponding to the SFN transmission mode is determined based on the preset rule or protocol specification, and the maximum number of transmission layers corresponding to the single-TRP mode is the same as the maximum number of transmission layers corresponding to the SFN transmission mode.

In an embodiment, the first SRS resource set or the second SRS resource set is associated with a first resource indication field; the codepoint corresponding to the first resource indication field is adapted to the maximum number of transmission layers corresponding to the single-TRP mode and the maximum number of transmission layers corresponding to the SFN transmission mode.

In an embodiment, the maximum number of transmission layers corresponding to the SFN transmission mode is 2.

In an embodiment, the maximum number of transmission layers corresponding to the SFN transmission mode is greater than 2.

In an embodiment, the PUSCH reception is based on a non-codebook basis, and the second indication field is a SRS Resource Indicator (SRI) indication field; the PUSCH reception is based on a codebook basis, and the second indication field is the SRI indication field and/or the Transmission Precoding Matrix Indicator (TPMI) indication field.

According to a third aspect of the present disclosure, a communications apparatus is provided, including: a processing unit 101, configured to determine that a PUSCH configuration uses a single frequency network (SFN) transmission mode; and a communication unit 102, configured to perform a single-transmission reception point (TRP) PUSCH transmission or a multi-TRP PUSCH transmission in the SFN transmission mode based on a first indication field for sounding reference signal (SRS) in downlink control information (DCI). The single-TRP PUSCH transmission refers to a PUSCH transmission directed to a single TRP via a single antenna panel. The multi-TRP PUSCH transmission in the SFN transmission mode refers to a PUSCH transmission directed to different TRPs respectively via multiple antenna panels in the SFN transmission mode. The first indication field is used to indicate the association between the second indication field and the SRS resource set in the SFN transmission mode, and to indicate the association between the second indication field and the TRP and/or the transmission configuration indicator (TCI) state in the SFN transmission mode.

In an embodiment, the second indication field includes the first resource indication field, and the SRS resource set includes the first SRS resource set and the second SRS resource set. The maximum number of transmission layers corresponding to the single-TRP mode is the same as the maximum number of transmission layers corresponding to the SFN transmission mode. The first SRS resource set or the second SRS resource set is associated with the first resource indication field. In an embodiment, the codepoint corresponding to the first indication field is used to indicate the association between the second indication field and the SRS resource set, and to indicate the association between the second indication field and the TRP and/or TCI state in the SFN transmission mode.

In an embodiment, the TRP includes a first TRP and a second TRP, and the TCI state includes a first TCI state and a second TCI state. The codepoint is used to indicate at least one of the following associations: the codepoint is a first codepoint, indicating that the first resource indication field is associated with the first SRS resource set, and that the first resource indication field is associated with the first TPR and/or the first TCI state; the codepoint is a second codepoint, indicating that the first resource indication field is associated with the second SRS resource set, and that the first resource indication field is associated with the second TPR and/or the second TCI state; the codepoint is a third codepoint, indicating that the first resource indication field is associated with the first SRS resource set, that the first resource indication field is associated with the first TPR and/or the first TCI state; that the second resource indication field is associated with the second SRS resource set, and that the first resource indication field is associated with the second TPR and/or the second TCI state; the codepoint is a fourth codepoint, which is a reserved codepoint.

In an embodiment, the TRP includes a first TRP and a second TRP, and the TCI state includes a first TCI state and a second TCI state. The codepoint indicates at least one of the following associations: the codepoint is a first codepoint, indicating that the first resource indication field is associated with the first SRS resource set, and that the first resource indication field is associated with the first TPR and/or the first TCI state; the codepoint is a second codepoint, indicating that the first resource indication field is associated with the second SRS resource set, and that the first resource indication field is associated with the second TRP and/or the second TCI state; the codepoint is a third codepoint, indicating that the first resource indication field is associated with the first SRS resource set, that the first resource indication field is associated with the first TPR and/or the first TCI state, that the second resource indication field is associated with the second SRS resource set, and that the second resource indication field is associated with the second TRP and/or the second TCI state; the codepoint is a fourth codepoint, indicating that the first resource indication field is associated with the first SRS resource set, that the first resource indication field is associated with the second TPR and/or the second TCI state, that the second resource indication field is associated with the second SRS resource set, and that the second resource indication field is associated with the first TRP and/or the first TCI state.

In an embodiment, the number of SRS resources corresponding to the first SRS resource set is greater than or equal to the number of SRS resources corresponding to the second SRS resource set.

In an embodiment, the second indication field includes a first resource indication field and a second resource indication field, and the SRS resource set includes a first SRS resource set and a second SRS resource set. The maximum number of transmission layers corresponding to the single-TRP mode is different from the maximum number of transmission layers corresponding to the SFN transmission mode. The first SRS resource set or the second SRS resource set is associated with the first resource indication field. Alternatively, the first SRS resource set is associated with both the first resource indication field and the second resource indication field. Alternatively, the second SRS resource set is associated with both the first resource indication field and the second resource indication field.

In an embodiment, the maximum number of transmission layers corresponding to the single-TRP mode and the maximum number of transmission layers corresponding to the SFN transmission mode are determined based on a preset rule or protocol specification. Alternatively, the maximum number of transmission layers corresponding to the SFN transmission mode is determined based on the preset rule or protocol specification, and the maximum number of transmission layers corresponding to the single-TRP mode is the same as the maximum number of transmission layers corresponding to the SFN transmission mode.

In an embodiment, the first SRS resource set or the second SRS resource set is associated with a first resource indication field. The codepoint corresponding to the first resource indication field is adapted to the maximum number of transmission layers corresponding to the single-TRP mode and the maximum number of transmission layers corresponding to the SFN transmission mode.

In an embodiment, the maximum number of transmission layers corresponding to the SFN transmission mode is 2.

In an embodiment, the maximum number of transmission layers corresponding to the SFN transmission mode is greater than 2.

In an embodiment, the PUSCH transmission is based on a non-codebook basis, and the second indication field is a SRS Resource Indicator (SRI) indication field; the PUSCH transmission is based on a codebook basis, and the second indication field is the SRI indication field and/or the Transmission Precoding Matrix Indicator (TPMI) indication field.

According to a fourth aspect of the embodiments of the present disclosure, a communications apparatus is provided, including: a processing unit 201, configured to determine that a PUSCH configuration uses a single frequency network (SFN) transmission mode; and a processing unit 202, configured to perform a single-transmission reception point (TRP) PUSCH reception or a PUSCH reception in a multi-TRP SFN transmission mode based on the first indication field in downlink control information (DCI). The single-TRP PUSCH reception refers to the PUSCH reception directed to a single antenna panel via a single TRP. The PUSCH reception in the multi-TRP SFN transmission mode refers to the PUSCH reception directed to different TRPs respectively via multiple antenna panels in the SFN transmission mode. The first indication field is used to indicate the association between the second indication field and the sounding reference signal (SRS) resource set in the SFN transmission mode, and to indicate the association between the second indication field and the TRP and/or the transmission configuration indicator (TCI) state in the SFN transmission mode.

In an embodiment, the second indication field includes the first resource indication field, and the SRS resource set includes the first SRS resource set and the second SRS resource set. The maximum number of transmission layers corresponding to the single-TRP mode is the same as the maximum number of transmission layers corresponding to the SFN transmission mode. The first SRS resource set or the second SRS resource set is associated with the first resource indication field.

In an embodiment, the codepoint corresponding to the first indication field is used to indicate the association between the second indication field and the SRS resource set, and to indicate the association between the second indication field and the TRP and/or TCI state in the SFN transmission mode.

In an embodiment, the TRP includes a first TRP and a second TRP, the TCI state includes a first TCI state and a second TCI state, and the codepoint is used to indicate at least one of the following associations: the codepoint is a first codepoint, indicating that the first resource indication field is associated with the first SRS resource set, and that the first resource indication field is associated with the first TPR and/or the first TCI state; the codepoint is a second codepoint, indicating that the first resource indication field is associated with the second SRS resource set, and that the first resource indication field is associated with the second TPR and/or the second TCI state; the codepoint is a third codepoint, indicating that the first resource indication field is associated with the first SRS resource set, that the first resource indication field is associated with the first TPR and/or the first TCI state, that the second resource indication field is associated with the second SRS resource set, and that the first resource indication field is associated with the second TPR and/or the second TCI state; the codepoint is a fourth codepoint, where the fourth codepoint is a reserved codepoint.

In an embodiment, the TRP includes a first TRP and a second TRP, the TCI state includes a first TCI state and a second TCI state, and the codepoint is used to indicate at least one of the following associations: the codepoint is a first codepoint, indicating that the first resource indication field is associated with the first SRS resource set, and that the first resource indication field is associated with the first TPR and/or the first TCI state; the codepoint is a second codepoint, indicating that the first resource indication field is associated with the second SRS resource set, and that the first resource indication field is associated with the second TRP and/or the second TCI state; the codepoint is a third codepoint, indicating that the first resource indication field is associated with the first SRS resource set, that the first resource indication field is associated with the first TPR and/or the first TCI state, that the second resource indication field is associated with the second SRS resource set, and that the second resource indication field is associated with the second TRP and/or the second TCI state; the codepoint is a fourth codepoint, indicating that the first resource indication field is associated with the first SRS resource set, that the first resource indication field is associated with the second TPR and/or the second TCI state, that the second resource indication field is associated with the second SRS resource set, and that the second resource indication field is associated with the first TRP and/or the first TCI state.

In an embodiment, the number of SRS resources corresponding to the first SRS resource set is greater than or equal to the number of SRS resources corresponding to the second SRS resource set.

In an embodiment, the resource indication field includes a first resource indication field and a second resource indication field, and the SRS resource set includes a first SRS resource set and a second SRS resource set. The maximum number of transmission layers corresponding to the single-TRP mode is different from the maximum number of transmission layers corresponding to the SFN transmission mode. The first SRS resource set or the second SRS resource set is associated with the first resource indication field. Alternatively, the first SRS resource set is associated with both the first resource indication field and the second resource indication field. Alternatively, the second SRS resource set is associated with both the first resource indication field and the second resource indication field.

In an embodiment, the maximum number of transmission layers corresponding to the single-TRP mode and the maximum number of transmission layers corresponding to the SFN transmission mode are determined based on the preset rule or protocol specification. Alternatively, the maximum number of transmission layers corresponding to the SFN transmission mode is determined based on the preset rule or protocol specification, and the maximum number of transmission layers corresponding to the single-TRP mode is the same as the maximum number of transmission layers corresponding to the SFN transmission mode.

In an embodiment, the first SRS resource set or the second SRS resource set is associated with a first resource indication field. The codepoint corresponding to the first resource indication field is adapted to the maximum number of transmission layers corresponding to the single-TRP mode and the maximum number of transmission layers corresponding to the SFN transmission mode.

In an embodiment, the maximum number of transmission layers corresponding to the SFN transmission mode is 2.

In an embodiment, the maximum number of transmission layers corresponding to the SFN transmission mode is greater than 2.

In an embodiment, the PUSCH transmission is based on a non-codebook basis, the second indication field is a SRS Resource Indicator (SRI) indication field; the PUSCH transmission is based on a codebook basis, the second indication field is the SRI indication field and/or the Transmission Precoding Matrix Indicator (TPMI) indication field.

According to a fifth aspect of the embodiments of the present disclosure, a communication device is provided, including: a processor; and a memory for storing instructions being executable by the processor. The processor is configured to call the instructions stored in the memory to perform the method according to the first aspect or any one of the embodiments in the first aspect.

According to a sixth aspect of the embodiments of the present disclosure, a communication device is provided, including: a processor; and a memory for storing instructions being executable by the processor. The processor is configured to call the instructions stored in the memory to perform the method according to the second aspect or any one of the embodiments in the second aspect.

According to a seventh aspect of the embodiments of the present disclosure, a system is provided, including a terminal and a network device. The terminal is configured to perform the method according to any embodiment in the first aspect. The network device is configured to perform the method according to any embodiment in the second aspect.

According to an eighth aspect of the embodiments of the present disclosure, a storage medium is provided, where the storage medium has instructions stored therein. When the instructions in the storage medium are executed by the processor of the terminal, the terminal is enabled to perform the method according to the first aspect or any one of the embodiments in the first aspect.

According to a ninth aspect of the embodiments of the present disclosure, a storage medium is provided. The storage medium has instructions stored therein. When the instructions in the storage medium are executed by the processor of the network device, the network device is enabled to perform the method according to the second aspect or any one of the embodiments in the second aspect.

The technical solutions provided by the embodiments of the present disclosure may have the following beneficial effects. Based on the first indication field in the DCI, the present disclosure implements a single-TRP PUSCH transmission or a multi-TRP PUSCH transmission in the SFN transmission mode, thereby enabling dynamic switching between the single-TRP mode and the multi-TRP mode, which is better suited for different terminals.

It should be understood that the above general description and the following detailed description are merely examples and illustrative and do not limit the present disclosure.

BRIEF DESCRIPTION OF THE DRAWINGS

The accompanying drawings herein are incorporated into and constitute a part of the specification. They illustrate embodiments consistent with the present disclosure and, together with the specification, serve to explain the principles of the present disclosure.

Fig. 1 is a schematic diagram of a wireless communication system according to an example embodiment.

Fig. 2 is a schematic diagram of a multi-antenna panel/multi-TRP transmission scenario under the single-DCI scheduling according to an example embodiment.

Fig. 3 is a schematic diagram of a multi-antenna panel/multi-TRP transmission scenario under the multi-DCI scheduling according to an example embodiment.

Fig. 4 is a schematic diagram of a multi-TP transmission mode according to an example embodiment.

Fig. 5 is a flowchart of a PUSCH transmission method according to an example embodiment.

Fig. 6 is a flowchart of another PUSCH transmission method according to an example embodiment.

Fig. 7 is a flowchart of another PUSCH transmission method according to an example embodiment.

Fig. 8 is a flowchart of another PUSCH transmission method according to an example embodiment.

Fig. 9 is a schematic diagram of a communication apparatus according to an example embodiment.

Fig. 10 is a schematic diagram of another communication apparatus according to an example embodiment.

Fig. 11 is a schematic diagram of a communication device according to an example embodiment.

Fig. 12 is a schematic diagram of another communication device according to an example embodiment.

## EP 4 668 967 A1

### DETAILED DESCRIPTION OF THE EMBODIMENTS

The example embodiments will be described in detail herein, with examples illustrated in the accompanying drawings. When the following description refers to the drawings, unless otherwise indicated, identical numerals in different drawings represent identical or similar elements. The implementations described in the following example embodiments do not represent all the embodiments consistent with the present disclosure.

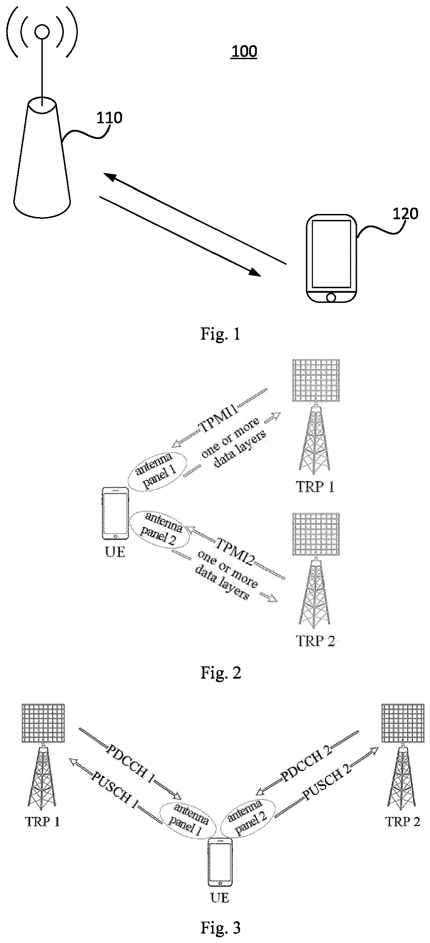

The PUSCH transmission method described in the present disclosure may be applied to a wireless communication system 100 shown in Fig. 1. The network system may include a network device 110 and a terminal 120. It should be understood that the wireless communication system shown in Fig. 1 is merely illustrative and that the wireless communication system may also include other network devices, such as core network devices, wireless relay devices, and wireless backhaul devices, which are not shown in Fig. 1. The embodiments of the present disclosure do not limit the number of network devices or terminals included in the wireless communication system.

It should be further understood that the wireless communication system in the embodiments of the present disclosure is a network that provides wireless communication capabilities. The wireless communication system may employ various communication technologies, such as Code Division Multiple Access (CDMA), Wideband Code Division Multiple Access (WCDMA), Time Division Multiple Access (TDMA), Frequency Division Multiple Access (FDMA), Orthogonal Frequency-Division Multiple Access (OFDMA), Single Carrier Frequency Division Multiple Access (SC-FDMA), and Carrier Sense Multiple Access with Collision Avoidance. Based on factors such as capacity, speed, and latency of different networks, networks may be categorized as 2G, 3G, 4G, or future evolved networks, such as the 5th Generation Wireless Communication System (5G) networks. 5G networks are also referred to as New Radio (NR). For ease of description, the present disclosure will sometimes refer to a wireless communication network simply as a network.

Furthermore, the network device 110 referred to in the present disclosure may also be referred to as a radio access network device. The wireless access network device may be a base station, an evolved Node B (eNB), a home base station, an access point (AP) in a Wireless Fidelity (WIFI) system, a wireless relay node, a wireless backhaul node, or a transmission point (TP). It may also be a gNB in an NR system, or a component or portion of a base station. In the case of a vehicle-to-everything (V2X) communication system, the network device may also be an in-vehicle device. It should be understood that the embodiments of the present disclosure do not limit the specific technology and device form used by the network device.

Furthermore, the terminal 120 referred to in the present disclosure, which may also be referred to as a terminal device, user equipment (UE), mobile station (MS), or mobile terminal (MT), is a device that provides voice and/or data connectivity to users. For example, the terminal may be a handheld device with wireless connectivity, an in-vehicle device, or the like. Currently, some examples of terminals include mobile phones, pocket personal computers (PPCs), handheld computers, personal digital assistants (PDAs), laptops, tablets, wearable devices, and in-vehicle devices. Furthermore, in the case of a vehicle-to-everything (V2X) communication system, the terminal device may also be an in-vehicle device. It should be understood that the embodiments of the present disclosure do not limit the specific technology or device form employed by the terminal.

In the embodiments of the present disclosure, the network device 110 and the terminal 120 may utilize any feasible wireless communication technology to transmit data to each other. The transmission channel over which the network device 110 transmits data to the terminal 120 is called a downlink (DL) channel, and the transmission channel over which the terminal 120 transmits data to the network device 110 is called an uplink (UL) channel. It is understood that the network device involved in the embodiments of the present disclosure may be a base station. It shall be noted that the network device may also be any other possible network device, and the terminal may be any possible terminal. The present disclosure is not limited thereto.

The physical uplink shared channel (PUSCH) transmission may be transmitted to the TRPs of multiple network devices.

Related technologies employ time division multiplexing (TDM) to enable the terminal to transmit PUSCH to multiple TRPs. However, the terminal utilizing TDM are not required to be capable of transmitting beams simultaneously. In other words, the terminal may have only one antenna panel.

With the advancement of communication technology, in order to ensure higher reliability and throughput for PUSCH transmission and reduce transmission latency in the multi-TRP mode, a multi-antenna panel/multi-TRP uplink simultaneous transmission scheme is being adopted. The terminal using the multi-antenna panel/multi-TRP uplink simultaneous transmission scheme is required to be capable of simultaneous multi-beam transmission. This means that the terminal must have multiple antenna panels. This supports simultaneous uplink transmission with multiple antenna panels (STxMPs).

The PUSCH transmission may be scheduled for multiple antenna panels/multi-TRP mode based on the single downlink control information (DCI). Fig. 2 illustrates a multi-antenna panel/multi-TRP transmission scenario under the single-DCI scheduling. Referring to Fig. 2, UE represents the terminal, and TPMI represents the Transmission Precoding Matrix Indicator (TPMI). The UE transmits TPMI1 to TPR1 on antenna panel 1 and transmits TPMI2 to TPR2 on antenna

8

panel 2.

The PUSCH transmission may be scheduled for multiple antenna panels/multi-TRP mode based on multiple DCIs. Fig. 3 illustrates a multi-antenna panel/multi-TRP transmission scenario under the multi-DCI scheduling. Referring to Fig. 3, PDCCH stands for Physical Downlink Control Channel, and the terminal transmits data on antenna panel 1 with respect to TPR 1 based on PDCCH 1 and PUSCH 1.

In related technologies, the multi-transmission point (TP) transmission is based on non-coherent-joint transmission (NC-JT). The non-coherent transmission indicates that each data stream value is mapped onto the port corresponding to the TRP/antenna panel with a consistent large-scale channel parameter quasi-colocated (QCL). Different data streams may be mapped onto the unused QCL ports without treating all the coordinated points as a virtual array and performing joint configuration on each layer.

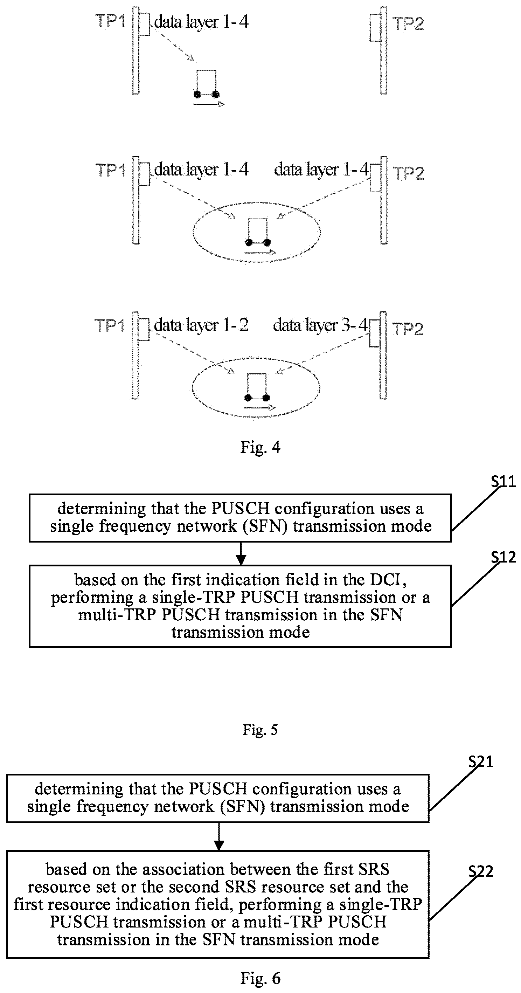

Fig. 4 is a schematic diagram for the multi-TP transmission. With reference to Fig. 4, the upper portion of the figure shows a single-point transmission mode (DPS), where all the codewords and the corresponding layers are transmitted through a single transmission point; the middle portion of the figure shows a coherent transmission mode (C-JT), where all the codewords and layers are jointly precoded and then transmitted through two transmission points; and the lower portion of the figure shows a non-coherent transmission mode (NC-JT), where the codewords corresponding to data layers 1-2 are transmitted from TP1, and the codewords corresponding to data layers 3-4 are transmitted from TP2.

The multi-antenna panel PUSCH transmission supports two different configuration modes: a codebook-based transmission and a non-codebook-based transmission. In the codebook-based uplink simultaneous transmission, the terminal needs to configure a Sounding Reference Signal (SRS) resource set for uplink transmission. The SRS resource set may be configured with multiple SRS resources. The network device may feedback a SRS resource indicator (SRI) with $\left\lceil \log_2\left(N_{SRS}\right) \right\rceil$ bits based on the number ($N_{SRS}$) of SRS resources in the SRS resource set, so that the SRS resources can be selected based on the indication of SRI. Furthermore, the network device determines the transmission precoding matrix indicator (TPMI) and the transmission layer number (Rank Indicator, RI) to be used by the terminal for actual transmission, and notifies the terminal. The data of the terminal in the subsequent uplink transmission needs to be precoded using TPMI and RI specified by the network device. The precoded data is then mapped onto the corresponding antenna port according to the spatial relation information (Spatial Relation Info) corresponding to the SRS resource indicated by the SRI.

As an example, Table 1 shows an indication method for multiple SRS resources by SRI. Table 2, using four antenna ports as an example, shows the signaling methods for TPMI and RI for single-layer transmission respectively, tailored to different UE capabilities. UE capabilities are categorized as fully correlated, partially correlated, and uncorrelated, representing the correlation capabilities of the antenna ports. Table 3 corresponds to the codewords for single-layer transmission with four antenna ports. In Table 1, SRI(s) represents the number of SRI indications, $N_{SRS}$ is the number of SRS resources.

Table 1

| Bit field mapped to index | SRI(s), $N_{SRS}$ = 2 |
|---|---|
| 0 | 0 |
| 1 | 1 |

Table 2

| Bit field mapped to index | codebooksubset = fullyAndPartialAndNonCoherent | Bit field mapped to index | codebookSubset= partialAndNonCoherent | Bit field mapped to index | codebookSubset = nonCoherent |
|---|---|---|---|---|---|
| 0 | 1 layer: TPMI=0 | 0 | 1 layer: TPMI=0 | 0 | 1 layer: TPMI=0 |
| 1 | 1 layer: TPMI=1 | 1 | 1 layer: TPMI=1 | 1 | 1 layer: TPMI=1 |
| ... | ... | ... | ... | ... | ... |
| 3 | 1 layer: TPMI=3 | 3 | 1 layer: TPMI=3 | 3 | 1 layer: TPMI=3 |
| 4 | 1 layer: TPMI=4 | 4 | 1 layer: TPMI=4 | | |
| ... | ... | ... | ... | | |
| 11 | 1 layer: TPMI=11 | 11 | 1 layer: TPMI=11 | | |
| 12 | 1 layers: TPMI=12 | 12-15 | reserved | | |
| ... | ... | | | | |

(continued)

| Bit field mapped to index | codebooksubset = fullyAndPartialAndNonCoherent | Bit field mapped to index | codebookSubset= partialAndNonCoherent | Bit field mapped to index | codebookSubset = nonCoherent |
|---|---|---|---|---|---|
| 27 | 1 layers: TPMI=27 | | | | |
| 28-31 | reserved | | | | |

Table 3

| TPMI index | $W$ ordered from left to right in increasing order of TPMI index | | | | | | | |
|---|---|---|---|---|---|---|---|---|
| 0 - 7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| 8 - 15 | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\-1\end{bmatrix}$ | $\frac{1}{2}\begin{bmatrix}1\\1\\j\\j\end{bmatrix}$ | $\frac{1}{2}\begin{bmatrix}1\\1\\-1\\1\end{bmatrix}$ | $\frac{1}{2}\begin{bmatrix}1\\1\\-j\\-j\end{bmatrix}$ |
| 16 - 23 | $\frac{1}{2}\begin{bmatrix}1\\j\\1\\j\end{bmatrix}$ | $\frac{1}{2}\begin{bmatrix}1\\j\\j\\1\end{bmatrix}$ | $\frac{1}{2}\begin{bmatrix}1\\j\\-1\\-j\end{bmatrix}$ | $\frac{1}{2}\begin{bmatrix}1\\j\\-j\\-1\end{bmatrix}$ | $\frac{1}{2}\begin{bmatrix}1\\-1\\1\\1\end{bmatrix}$ | $\frac{1}{2}\begin{bmatrix}1\\-1\\j\\-j\end{bmatrix}$ | $\frac{1}{2}\begin{bmatrix}1\\-1\\-1\\-1\end{bmatrix}$ | $\frac{1}{2}\begin{bmatrix}1\\-1\\-j\\j\end{bmatrix}$ |
| 24 - 27 | $\frac{1}{2}\begin{bmatrix}1\\-j\\1\\-j\end{bmatrix}$ | $\frac{1}{2}\begin{bmatrix}1\\-j\\j\\-1\end{bmatrix}$ | $\frac{1}{2}\begin{bmatrix}1\\-j\\-1\\j\end{bmatrix}$ | $\frac{1}{2}\begin{bmatrix}1\\-j\\-j\\1\end{bmatrix}$ | - | - | - | - |

For the non-codebook-based uplink transmission, the network device configures the associated downlink CSI-RS for the non-codebook-based transmission, so that the terminal uses it for downlink channel sounding. The terminal selects a precoding matrix based on downlink channel calculations, and in the meantime transmits SRS in each precoding beam direction on the configured SRS resource set. The base station performs uplink channel detection on the SRS, and the network device schedules resources for the UE at the same time, notifying the UE via downlink signaling. In the meanwile, the SRI indication may be used for selecting the beam within the precoding matrix. The terminal uses the modified precoding matrix to determine the actual precoding and the number of allowed layers for PUSCH transmission. The terminal determines the limit for the precoding indicator based on the higher-layer parameter maximum number of transmission layers (maxRank), and the number of SRS resources indicated by the SRI must not exceed maxRank. To enable the network to modify the actual precoding matrix used by the terminal, for the non-codebook-based transmission, the network needs to configure an SRS resource set for the terminal.

As an example, Tables 4-7 illustrate a specific indication method for the SRI indication field for the non-codebook transmission as specified in the protocol. In Tables 4-7, Lmax represents the limit for the number of transmission layers configured by the base station. The terminal determines the table corresponding to SRI and the number of bits in the SRI indication field based on this parameter configuration.

Table 4

| Bit field mapped to index | SRI(s), $N_{SRS}$ = 2 | Bit field mapped to index | SRI(s), $N_{SRS}$ = 3 | Bit field mapped to index | SRI(s), $N_{SRS}$ = 4 |
|---|---|---|---|---|---|
| 0 | 0 | 0 | 0 | 0 | 0 |
| 1 | 1 | 1 | 1 | 1 | 1 |
| | | 2 | 2 | 2 | 2 |
| | | 3 | reserved | 3 | 3 |

Table 5

| Bit field mapped to index | SRI(s), $N_{SRS}$ = 2 | Bit field mapped to index | SRI(s), $N_{SRS}$ = 3 | Bit field mapped to index | SRI(s), $N_{SRS}$ = 4 |
|---|---|---|---|---|---|
| 0 | 0 | 0 | 0 | 0 | 0 |
| 1 | 1 | 1 | 1 | 1 | 1 |
| 2 | 0,1 | 2 | 2 | 2 | 2 |
| 3 | reserved | 3 | 0,1 | 3 | 3 |
| | | 4 | 0,2 | 4 | 0,1 |
| | | 5 | 1,2 | 5 | 0,2 |
| | | 6-7 | reserved | 6 | 0,3 |
| | | | | 7 | 1,2 |
| | | | | 8 | 1,3 |
| | | | | 9 | 2,3 |
| | | | | 10-15 | reserved |

Table 6

| Bit field mapped to index | SRI(s), $N_{SRS}$ = 2 | Bit field mapped to index | SRI(s), $N_{SRS}$ = 3 | Bit field mapped to index | SRI(s), $N_{SRS}$ = 4 |
|---|---|---|---|---|---|
| 0 | 0 | 0 | 0 | 0 | 0 |
| 1 | 1 | 1 | 1 | 1 | 1 |
| 2 | 0,1 | 2 | 2 | 2 | 2 |
| 3 | reserved | 3 | 0,1 | 3 | 3 |
| | | 4 | 0,2 | 4 | 0,1 |
| | | 5 | 1,2 | 5 | 0,2 |
| | | 6 | 0,1,2 | 6 | 0,3 |
| | | 7 | reserved | 7 | 1,2 |
| | | | | 8 | 1,3 |
| | | | | 9 | 2,3 |
| | | | | 10 | 0,1,2 |
| | | | | 11 | 0,1,3 |
| | | | | 12 | 0,2,3 |
| | | | | 13 | 1,2,3 |
| | | | | 14-15 | reserved |

Table 7

| Bit field mapped to index | SRI(s), $N_{SRS}$ = 2 | Bit field mapped to index | SRI(s), $N_{SRS}$ =3 | Bit field mapped to index | SRI(s), $N_{SRS}$ = 4 |
|---|---|---|---|---|---|
| 0 | 0 | 0 | 0 | 0 | 0 |
| 1 | 1 | 1 | 1 | 1 | 1 |
| 2 | 0,1 | 2 | 2 | 2 | 2 |
| 3 | reserved | 3 | 0,1 | 3 | 3 |
| | | 4 | 0,2 | 4 | 0,1 |
| | | 5 | 1,2 | 5 | 0,2 |
| | | 6 | 0,1,2 | 6 | 0,3 |
| | | 7 | reserved | 7 | 1,2 |
| | | | | 8 | 1,3 |
| | | | | 9 | 2,3 |
| | | | | 10 | 0,1,2 |
| | | | | 11 | 0,1,3 |
| | | | | 12 | 0,2,3 |
| | | | | 13 | 1,2,3 |
| | | | | 14 | 0,1,2,3 |
| | | | | 15 | reserved |

In the related art, the definition of the SRI indication field is shown in Table 8 below:

Table 8

| codepoint | SRS resource set | SRI field (codebook-based or non-codebook-based transmission) / TPMI field (codebook-based transmission) |
|---|---|---|
| 00 | S-TRP transmission mode configuration of first SRS resource set (first TRP) | first SRI/TPMI field |
| 01 | S-TRP transmission mode configuration of second SRS resource set (second TRP) | first SRI/TPMI field |
| 10 | M-TRP transmission mode (orded from TRP1 to TRP2) first SRS resource set corresponding to first SRI/TPMI field second SRS resource set corresponding to second SRI/TPMI field | first and second SRI/TPMI fields |
| 11 | M-TRP transmission mode (orded from TRP2 to TRP1) first SRS resource set corresponding to first SRI/TPMI field second SRS resource set corresponding to second SRI/TPMI field | first and second SRI/TPMI fields |

When the codepoint of the SRI indication field is 00, it instructs the terminal to transmit PUSCH to TRP1 in the s-TRP mode, being associated with the first SRS resource set. In the codebook-based transmission mode, the first SRI/TPMI field in the DCI is used to obtain the SRI and TPMI used for this transmission. In the non-codebook-based transmission mode, the first SRI field in the DCI is used to obtain the SRI used for this transmission. In this case, the second SRI/TPMI field is not used.

When the codepoint of the SRI indication field is 01, it instructs the terminal to transmit PUSCH to TRP2 in the s-TRP mode, being associated with the second SRS resource set. In the codebook-based transmission mode, the first SRI/TPMI field in the DCI is used to obtain the SRI and TPMI used for this transmission. In the non-codebook-based transmission mode, the first SRI field in the DCI is used to obtain the SRI used for this transmission. In this case, the second SRI/TPMI field is not used.

When the codepoint of the SRI indication field is 10, it instructs the terminal to use the m-TRP mode for transmitting PUSCH to TRP1 in the first TO, being associated with the first SRS resource set, and then for transmitting PUSCH to TRP2 in the second TO. In the codebook-based transmission mode, the first SRI/TPMI field in the DCI is used to obtain the SRI and TPMI used for transmission to TRP1, and the second SRI/TPMI field is used to obtain the SRI and TPMI used for transmission to TRP2. In the non-codebook-based transmission mode, the first SRI/TPMI field in the DCI is used to obtain the SRI used for transmission to TRP1, and the second SRI/TPMI field is used to obtain the SRI used for transmission to TRP2.

When the codepoint of the SRI indication field is 11, it instructs the terminal to use the m-TRP mode for transmitting PUSCH to TRP2 in the first TO, being associated with the second SRS resource set, and then for transmitting PUSCH to TRP1 in the second TO. In the codebook-based transmission mode, the second SRI/TPMI field in the DCI is used to obtain the SRI and TPMI used for transmission to TRP2, and the first SRI/TPMI field in the DCI is used to obtain the SRI and TPMI used for transmission to TRP1. In the non-codebook-based transmission mode, the second SRI/TPMI field in the DCI is used to obtain the SRI used for transmission to TRP2, and the first SRI/TPMI field in the DCI is used to obtain the SRI used for transmission to TRP1.

In related art, STxMPs supports transmission schemes for PUSCH based on S-DCI, including: the space division multiplexing (SDM) scheme and the single frequency network (SFN) scheme.

In the SDM scheme, different parts of a PUSCH transport block (TB) are transmitted on the same time-frequency resources toward two different TRPs via corresponding DMRS ports or port combinations allocated on different antenna panels respectively. Different panels/TRPs/transmission opportunities (TOs) are associated with different TCI states respectively. In the SFN spatial division multiplexing scheme, a PUSCH TB is transmitted on the same time-frequency resources toward two different TRPs via the same DMRS port or port combination allocated on different antenna panels respectively. Different antenna panels/TRPs/transmission opportunities (TOs) are associated with different TCI states respectively.

For terminals with multiple antenna panels, how to dynamically switch between the single-TRP mode and the multi-TRP mode is still under discussion.

Thus, the present disclosure implements a single-TRP PUSCH transmission or a multi-TRP PUSCH transmission in the SFN transmission mode based on the first indication field in the DCI under the SFN transmission mode, enabling dynamic switching between the single-TRP mode and the multi-TRP mode for better adaptability to different terminals.

Fig. 5 is a flow chart of a PUSCH transmission method according to an example embodiment. As shown in Fig. 1, the method is performed by a terminal and includes the following steps.

In step S11, it is determined that the PUSCH configuration uses a single frequency network (SFN) transmission mode.

In step S12, based on the first indication field in the DCI, a single-TRP PUSCH transmission or a multi-TRP PUSCH transmission in a SFN transmission mode is performed.

In an embodiment, when the terminal transmits based on PUSCH to the network device, the PUSCH is configured to use the SFN transmission mode, which supports a multi-TRP-based PUSCH transmission.

In an embodiment, the terminal may perform a single-TRP PUSCH transmission or a multi-TRP PUSCH transmission in a SFN mode based on the first indication field in the DCI. The single-TRP PUSCH transmission uses a single antenna panel to transmit PUSCH toward a single TRP. The multi-TRP PUSCH transmission in the SFN transmission mode uses multiple antenna panels to transmit PUSCH toward different TRPs in the SFN mode respectively. The terminal uses multiple antenna panels to transmit PUSCH toward different TRPs in the SFN transmission mode respectively, which can improve transmission reliability and throughput, while effectively reducing transmission latency in the multi-TRP mode. The terminal uses a single antenna panel to transmit PUSCH toward a single TRP, which can save configuration resources. The terminal dynamically switches between the single-TRP mode and the multi-TRP mode using the SRS resource indication field, so that the configuration resources are saved as much as possibile, improving transmission reliability and throughput, and reducing transmission latency in the multi-TRP mode.

In an embodiment, the first indication field is used to indicate the association between the second indication field and the SRS resource set in the SFN transmission mode, or to indicate the association between the second indication field and the SRS resource set, as well as the TRP and/or the beam indicator (TCI) state in the SFN transmission mode.

For example, the first indication field may indicate the association between different second indication fields and different SRS resource sets in the SFN transmission mode. The association between the second indication field and the SRS resource set indicates that the second indication field is indicative of the SRS resources in that SRS resource set.

For another example, the first indication field may also indicate the association between different second indication fields and different SRS resource sets, as well as different TRPs and/or different TCI states in the SFN transmission mode. The second indication field is associated with the TRP, indicating that the second indication field is used to indicate the SRS resource or precoding for transmission in the direction toward that TRP. The second indication field is associated with the TCI state, indicating that the second indication field is used to indicate the SRS resource or precoding for transmission in that TCI state.

In an embodiment, the second indication field may be an SRI indication field, which is used by the terminal and the network device for codebook or non-codebook transmission. The second indication field may also be a TPMI indication field, which is typically used for codebook transmission. It is understood that when the terminal transmits based on codebook, it may configure the SRI indication field for indication, or the TPMI indication field for indication.

In an embodiment of the present disclosure, based on the first indication field in the DCI, a single-TRP PUSCH transmission or a multi-TRP PUSCH transmission in the SFN transmission mode is performed, enabling dynamic switching between the single-TRP mode and the multi-TRP mode, better suited for different terminals.

In the PUSCH transmission method proposed by the embodiments of the present disclosure, the maximum number of transmission layers corresponding to the SFN transmission mode is generally two. The embodiments of the present disclosure will be explained assuming that the maximum number of transmission layers for the SFN transmission mode is two. It is understood that the maximum number of transmission layers for the SFN transmission mode may also be greater than two, and the present disclosure is not limited in this regard

According to some embodiments, in the PUSCH transmission method, the second indication field includes a first resource indication field, and the SRS resources include first and second SRS resources. When the maximum number of transmission layers corresponding to the single-TRP mode is the same as the maximum number of transmission layers corresponding to the SFN transmission mode, the first indication field may indicate that either the first SRS resource set or the second SRS resource set is associated with the first resource indication field.

In an embodiment, Fig. 6 is a schematic diagram illustrating a PUSCH transmission method according to an example embodiment. As shown in Fig. 6, the PUSCH transmission method includes the following steps.

In step S21, it is determined that the PUSCH configuration uses a single frequency network (SFN) transmission mode.

In step S22, based on the association between the first SRS resource set or the second SRS resource set and the first resource indication field, a single-TRP PUSCH transmission is performed or a multi-TRP PUSCH transmission in a SFN transmission mode is performed.

In an embodiment, the first indication field is associated with an SRS resource. For example, the first indication field is the SRS resource set indication field in the DCI.

In an embodiment, the maximum number of transmission layers for the SFN transmission mode may be determined based on a preset rule or protocol specification, such that the maximum number of transmission layers corresponding to the single-TRP mode is the same as the maximum number of transmission layers corresponding to the SFN transmission mode. Alternatively, when the maximum number of transmission layers for both the single-TRP mode and the SFN transmission mode are determined based on the preset rule or protocol specification and are the same, the resource set indication field may indicate that the first SRS resource set or the second SRS resource set is associated with the first resource indication field. The terminal may perform PUSCH transmission based on SRS resources in the first SRS resource set indicated by the first resource indication field, or may perform PUSCH transmission based on SRS resources in the second SRS resource set indicated by the first resource indication field.

According to the embodiments of the present disclosure, in the SFN transmission mode, based on the first indication field in the DCI, a single-TRP PUSCH transmission is performed or a multi-TRP PUSCH transmission in a SFN transmission mode is performed. This allows for dynamic switching between the single-TRP mode and the multi-TRP mode, making it more suitable for different terminals.

In some embodiments, the codepoint corresponding to the first indication field is used to indicate the association between the second indication field and the SRS resource set, as well as the TRP and/or the TCI state.

In an embodiment, the terminal may determine the codepoint corresponding to the resource set indication field and indicate, based on the codepoint, the association between the second indication field and the SRS resource set, as well as the TRP and/or the TCI state.

In the embodiments of the present disclosure, the terminal determines the codepoint and dynamically switches between the single-TRP mode and the multi-TRP mode based on different codepoints, making it more suitable for different terminals.

According to some embodiments, in the PUSCH transmission method, the TRP includes a first TRP and a second TRP, and the TCI state includes a first TCI state and a second TCI state. The codepoint corresponding to the resource set indication field includes a first codepoint, a second codepoint, a third codepoint, and a fourth codepoint. The first codepoint is used to indicate that the first resource indication field is associated with the first SRS resource set, and is used to indicate that the first resource indication field is associated with the first TPR and/or the first TCI state. The second codepoint is used to indicate that the first resource indication field is associated with the second SRS resource set, and is used to indicate that the first resource indication field is associated with the second TPR and/or the second TCI state. The third codepoint is used to indicate that the first resource indication field is associated with the first SRS resource set, and is used to indicate that the first resource indication field is associated with the first TPR and/or the first TCI state, and is used to indicate that the second resource indication field is associated with the second SRS resource set, and is used to indicate that the second resource indication field is associated with the second TPR and/or the second TCI state. The fourth codepoint is a reserved codepoint. The reserved codepoint may be understood as a codepoint without any indication information. The indication information may be configured as needed.

In an embodiment, the terminal may perform PUSCH transmission based on different codepoints. For example, the terminal may perform PUSCH transmission based on the first codepoint. This may be considered that the terminal performs mapping based on resources in the first SRS resource set, and performs PUSCH transmission based on the first TCI state in the first TRP direction.

In some embodiments, the codepoint corresponding to the resource set indication field includes a first codepoint, a second codepoint, a third codepoint, and a fourth codepoint. The first, second, and third codepoints are the same as those in the above-mentioned embodiment, and are not further described in the present disclosure. The fourth codepoint is used to indicate that the first resource indication field is associated with the first SRS resource set, that that the first resource indication field is associated with the second TPR and/or the second TCI state, that that the second resource indication field is associated with the second SRS resource set, and that the second resource indication field is associated with the first TPR and/or the first TCI state.

In an embodiment, the fourth codepoint corresponding to the resource set indication field has a different order for the TRP and the TCI state when compared to the third codepoint, and the fourth codepoint meets more application scenarios.

In an embodiment, it may be understood that the first and second codepoints correspond to the single-TRP mode, while the third and fourth codepoints correspond to the SFN transmission mode. By determining different codepoints and performing PUSCH transmission based on these codepoints, the terminal can dynamically switch between the single-TRP and multi-TRP transmission modes.

According to the embodiments of the present disclosure, in the SFN transmission mode, based on the first indication field in the DCI, a single-TRP PUSCH transmission or a multi-TRP PUSCH transmission in a SFN transmission mode is performed, thereby enabling dynamic switching between the single-TRP and multi-TRP modes, making it more suitable for different terminals.

According to some embodiments, in the PUSCH transmission method, the number of SRS resources corresponding to the first SRS resource set is greater than or equal to the number of SRS resources corresponding to the second SRS resource set.

In an embodiment, the bit width of the first resource indication field is related to the number of SRS resources in the SRS resource set associated with the first resource indication field. It may be understood that the greater the number of SRS resources in the SRS resource set associated with the first resource indication field, the larger the bit width of the first resource indication field.

In an embodiment, the first resource indication field in the first codepoint is used to indicate the first SRS resource set, and the first resource indication field in the second codepoint is used to indicate the association between the first resource indication field and the second SRS resource set. It should be understood that the bit width of the first resource indication field in the embodiments of the present embodiment must be sufficient to allow association with both the first and second SRS resource sets. The second resource indication field is associated with either the first or second SRS resource set. Therefore, the bit width of the first resource indication field is no less than the bit width of the second resource indication field. The network device configures the number of SRS resources in the first SRS resource set to be no less than the number of SRS resources in the second SRS resource set, so that the bit width of the first resource indication field is no less than the bit width of the second resource indication field.

According to the embodiments of the present disclosure, based on the first indication field in the DCI, a single-TRP PUSCH transmission or a multi-TRP PUSCH transmission in a SFN transmission mode is performed, enabling dynamic switching between the single-TRP and multi-TRP modes, making it more suitable for different terminals.

According to some embodiments, in the PUSCH transmission method, the second indication field includes a first resource indication field and a second resource indication field, and the SRS resource set includes a first SRS resource set and a second SRS resource set. When the maximum numbers of transmission layers for the single-TRP and SFN transmission modes are determined based on a preset rule or protocol specification and are different, the first indication field may indicate that the first SRS resource set or the second SRS resource set is associated with the first resource indication field; or that the first SRS resource set is associated with both the first resource indication field and the second resource indication field; or that the second SRS resource set is associated with both the first resource indication field and the second resource indication field.

In an embodiment, when the maximum numbers of transmission layers for the SFN transmission mode and the single-TRP mode are different, the first SRS resource set or the second SRS resource set may be associated with the first resource indication field. Because the maximum numbers of transmission layers for the SFN transmission mode and the single-TRP mode are different, the corresponding first resource indication field has different bit widths. It is understood that the greater the maximum number of transmission layers for the SFN transmission mode or the single-TRP mode, the wider the bit width of the corresponding first resource indication field, indicating a greater number of SRS resources. Therefore, the bit width of the first resource indication field must be sufficient to indicate both a transmission in the SFN transmission mode and the single-TRP transmission mode, where the maximum number of transmission layers differs from that in the SFN transmission mode.

In an embodiment, when the maximum numbers of transmission layers for the SFN transmission mode and the single-TRP mode are different, the codepoints corresponding to the first resource indication field may be adapted to the maximum number of transmission layers corresponding to the single-TRP mode and the maximum number of transmission layers corresponding to the SFN transmission mode.

For example, the codepoints in the first resource indication field may be added, so that the codepoints corresponding to the first resource indication field are adapted to the maximum number of transmission layers corresponding to the single-TRP mode and the maximum number of transmission layers corresponding to the SFN transmission mode.

For another example, indication information is added to the existing reserved codepoints in the first resource indication field, so that the codepoints corresponding to the first resource indication field are adapted to the maximum number of transmission layers corresponding to the single-TRP mode and the maximum number of transmission layers corresponding to the SFN transmission mode.

In an embodiment, when transmitting in the SFN transmission mode, the first resource indication field may be aligned by adding reserved codepoint(s).

In an embodiment, the first resource indication field and the second resource indication field may jointly indicate the first SRS resource set, or the first resource indication field and the second resource indication field may jointly indicate the second SRS resource set. The joint indication may also satisfy the requirements of indicating the transmission in the SFN transmission mode and indicating the transmission in the single-TRP mode, where the maximum number of transmission layers different from that in the SFN transmission mode, thereby avoiding increasing DCI overhead and saving resources.

According to the embodiments of the present disclosure, in the SFN transmission mode, based on the first indication field in the DCI, a single-TRP PUSCH transmission or a multi-TRP PUSCH transmission in the SFN mode is performed. This allows for dynamic switching between the single-TRP and multi-TRP modes, making it more suitable for different terminals.

In some embodiments, the maximum numbers of transmission layers for the single-TRP mpode and the SFN transmission mode may be determined in the following way.

The maximum number of transmission layers corresponding to the single-TRP mode and the maximum number of transmission layers corresponding to the SFN transmission mode are determined based on a preset rule or protocol specification. Alternatively, the maximum number of transmission layers corresponding to the SFN mode is determined based on the preset rule or protocol specification, and the maximum number of transmission layers corresponding to the single-TRP mode is the same as the maximum number of transmission layers corresponding to the SFN mode.

In an embodiment, if the maximum number of transmission layers corresponding to the single-TRP mode and the maximum number of transmission layers corresponding to the SFN transmission mode are different, they are each determined based on the preset rule or protocol specification. If the maximum number of transmission layers corresponding to the single-TRP mode and the maximum number of transmission layers corresponding to the SFN transmission mode are the same, they may be determined in two ways. For example, the maximum number of transmission layers for the SFN mode may be determined based on the preset rule or protocol specification, so that the maximum number of transmission layers for the SFN mode is the same as the maximum number of transmission layers for the single-TRP mode.

In the embodiments of the present disclosure, based on the first indication field in the DCI, a single-TRP PUSCH transmission is performed or a multi-TRP PUSCH transmission in the SFN transmission mode is performed. This allows for dynamic switching between the single-TRP and multi-TRP modes, making it more suitable for different terminals.

According to some implementations, in the PUSCH method of the embodiments of the present disclosure, the maximum number of transmission layers corresponding to the SFN mode may be greater than two. When the maximum number of transmission layers corresponding to the SFN mode is greater than two, the indication method of the first indication field when the maximum number of transmission layers corresponding to the SFN transmission mode is the same as the maximum number of transmission layers in the single-TRP mode may be referred to in the above-mentioned embodiment, and will not be further described in the present disclosure.

Based on the same concept, the present disclosure also provides a PUSCH transmission method, which is performed by a network device.

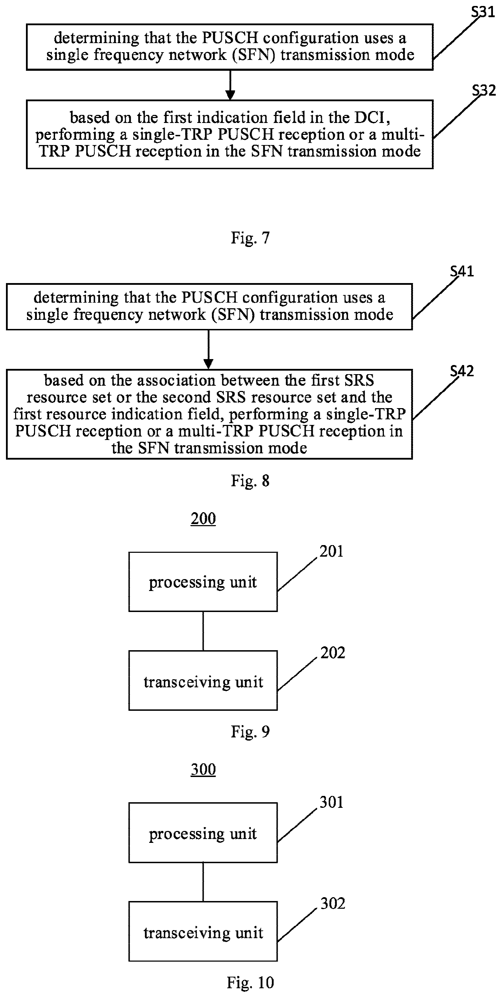

Fig. 7 is a flowchart of a PUSCH transmission method according to an example embodiment. As shown in Fig. 7, the method is performed by a terminal and includes the following steps.

In step S31, it is determined that the PUSCH configuration uses a single frequency network (SFN) transmission mode.

In step S32, based on the first indication field in the DCI, a single-TRP PUSCH reception is performed or a multi-TRP PUSCH reception in the SFN transmission mode is performed.

In an embodiment, when the network device performs PUSCH reception, the PUSCH configuration uses the SFN transmission mode that supports the multi-TRP PUSCH reception.

In an embodiment, based on the first indication field in the DCI, the network device may perform a single-TRP PUSCH reception or a multi-TRP PUSCH reception in the SFN transmission mode. The single-TRP PUSCH reception refers to PUSCH reception directed to a single antenna panel via a single TRP, while the multi-TRP PUSCH reception in the SFN transmission mode refers to PUSCH reception directed to different TRPs respectively via multiple antenna panels in the SFN transmission mode. The network device uses multiple antenna panels toward different TRPs respectively to perform PUSCH reception in the SFN transmission mode, improving transmission reliability and throughput while effectively reducing transmission latency in the multi-TRP mode. Using a single TRP toward a single antenna panel to perform PUSCH reception helps to save configuration resources. The network device uses the SRS resource indication field to dynamically switch between the single-TRP and multi-TRP modes, minimizing configuration resources as much as possibile, improving transmission reliability and throughput, and reducing transmission latency in the multi-TRP mode.

In an embodiment, the first indication field is used to indicate the association between the second indication field and the SRS resource set in the SFN transmission mode, or to indicate the association between the second indication field and the SRS resource set, as well as the TRP and/or the beam indicator (TCI) state in the SFN transmission mode.

In an embodiment, the second indication field may be an SRI indication field, which is used between the terminal and the network device for the codebook or non-codebook transmission. The second indication field may also be a TPMI indication field, which is typically used in the codebook transmission. It is understood that when the terminal transmits based on a codebook, it may configure the SRI indication field for indication, or it may configure the TPMI indication field for indication.

According to the embodiments of the present disclosure, a single-TRP PUSCH reception or a multi-TRP PUSCH reception in an SFN transmission mode is performed based on the first indication field in the DCI, thereby enabling dynamic switching between the single-TRP and multi-TRP modes to better suit different terminals.

In the PUSCH transmission method according to the embodiments of the present disclosure, the maximum number of transmission layers corresponding to the SFN transmission mode is generally two. The embodiments of the present disclosure will be explained assuming that the maximum number of transmission layers for the SFN transmission mode is two. It is understood that the maximum number of transmission layers for the SFN transmission mode may also be greater than two, and the present disclosure is not limited in this regard.

According to some embodiments, in the PUSCH transmission method, the second indication field includes a first resource indication field, and the SRS resources include a first SRS resource and a second SRS resource. When the maximum number of transmission layers corresponding to the single-TRP mode is the same as the maximum number of transmission layers corresponding to the SFN transmission mode, the first indication field may indicate that the first SRS resource set or the second SRS resource set is associated with the first resource indication field.

In an embodiment, Fig. 8 shows a schematic diagram of a PUSCH transmission method according to an example embodiment. As shown in Fig. 8, the PUSCH transmission method includes the following steps.

In step S41, it is determined that the PUSCH configuration uses a single frequency network (SFN) transmission mode.

In step S42, based on the association between the first SRS resource set or the second SRS resource set and the first resource indication field, a single-TRP PUSCH reception or a multi-TRP PUSCH reception in the SFN transmission mode is performed.

In an embodiment, the network device may indicate SRS resources in the first SRS resource set based on the first resource indication field, or the network device may indicate SRS resources in the second SRS resource set based on the first resource indication field, for the purpose of PUSCH reception.

According to the embodiments of the present disclosure, in the SFN transmission mode, a single-TRP PUSCH reception or a multi-TRP PUSCH reception in the SFN transmission mode is performed based on the first indication field in the DCI, thereby enabling dynamic switching between the single-TRP and multi-TRP modes, better suited for different terminals.

In some embodiments, the codepoint corresponding to the first indication field is used to indicate the association between the second indication field and the SRS resource set, as well as the TRP and/or the TCI state.

In an embodiment, the network device may determine a codepoint corresponding to a resource set indication field and indicate an association between the second indication field and the SRS resource set, as well as the TPR and/or the TCI state based on the codepoint.

In the embodiments of the present disclosure, the network device determines the codepoint and dynamically switches between the single-TRP and multi-TRP modes based on different codepoints, thereby better adapting to different terminals.

According to some embodiments, in the PUSCH transmission method, the TRP includes a first TRP and a second TRP, and the TCI state includes a first TCI state and a second TCI state. The codepoint corresponding to the resource set indication field includes a first codepoint, a second codepoint, a third codepoint, and a fourth codepoint. The first codepoint is used to indicate an association between the first resource indication field and the first SRS resource set, and to indicate an association between the first resource indication field and the first TPR and/or the first TCI state. The second codepoint is used to indicate that the first resource indication field is associated with the second SRS resource set, and is also used to indicate that the first resource indication field is associated with the second TPR and/or the second TCI state. The third codepoint is used to indicate that the first resource indication field is associated with the first SRS resource set, and is also used to indicate that the first resource indication field is associated with the first TPR and/or the first TCI state, and is also used to indicate that the second resource indication field is associated with the second SRS resource set, and is also used to indicate that the second resource indication field is associated with the second TPR and/or the second TCI state. The fourth codepoint is a reserved codepoint, which may be understood as a codepoint without any indication information, and the indication information may be configured as needed.

In an embodiment, the network device may perform PUSCH reception based on different codepoints.

In some embodiments, the codepoint corresponding to the resource set indication field includes a first codepoint, a second codepoint, a third codepoint, and a fourth codepoint. The first codepoint, the second codepoint, and the third codepoint are the same as those in the above embodiment(s) and are not further described in the present disclosure. The fourth codepoint is used to indicate that the first resource indication field is associated with the first SRS resource set, and is also used to indicate that the first resource indication field is associated with the second TPR and/or the second TCI state, and is also used to indicate that the second resource indication field is associated with the second SRS resource set, and is also used to indicate that the second resource indication field is associated with the first TPR and/or the first TCI state.

According to the embodiments of the present disclosure, in the SFN transmission mode, based on the first indication field in the DCI, a single-TRP PUSCH transmission or a multi-TRP PUSCH transmission in the SFN transmission mode is performed, enabling dynamic switching between the single-TRP and multi-TRP modes, better suited for different terminals.

According to some embodiments, in the PUSCH transmission method, the number of SRS resources corresponding to the first SRS resource set is greater than or equal to the number of SRS resources corresponding to the second SRS resource set.

According to the embodiments of the present disclosure, in the SFN transmission mode, based on the first indication field in the DCI, a single-TRP PUSCH reception or a multi-TRP PUSCH reception in the SFN transmission mode is performed. This allows for dynamic switching between the single-TRP and multi-TRP modes, making it more suitable for different terminals.

According to some embodiments, in the PUSCH transmission method, the second indication field includes a first resource indication field and a second resource indication field, and the SRS resource set includes a first SRS resource set and a second SRS resource set. When the maximum number of transmission layers for the single-TRP mode and the SFN transmission mode are both determined based on the preset rule or protocol specification and are different, the first indication field may indicate that either the first SRS resource set or the second SRS resource set is associated with the first resource indication field; or that the first SRS resource set is associated with both the first resource indication field and the second resource indication field; or that the second SRS resource set is associated with both the first resource indication field and the second resource indication field.

In an embodiment, when the maximum numbers of transmission layers for the SFN transmission mode and the single-TRP mode are different, it may indicate that the first SRS resource set or the second SRS resource set is associated with the first resource indication.

In an embodiment, when the maximum numbers of transmission layers for the SFN transmission mode and the single-TRP mode are different, the codepoint corresponding to the first resource indication field may be adapted to the maximum number of transmission layers corresponding to the single-TRP mode and the maximum number of transmission layers corresponding to the SFN transmission mode.

According to the embodiments of the present disclosure, in the SFN transmission mode, the first indication field in the DCI is used to perform a single-TRP PUSCH transmission or a multi-TRP PUSCH transmission in a SFN transmission mode, thereby enabling dynamic switching between the single-TRP and multi-TRP modes and better adapting to different terminals.

In some embodiments, the maximum numbers of transmission layers for the single-TRP mode and the SFN transmission mode may be determined as follows.

The maximum number of transmission layers for the single-TRP mode and the maximum number of transmission layers for the SFN transmission mode are determined based on a preset rule or protocol specification. Alternatively, the maximum number of transmission layers corresponding to the SFN transmission mode is determined based on the preset rule or protocol specification, and the maximum number of transmission layers corresponding to the single-TRP mode is the same as the maximum number of transmission layers corresponding to the SFN transmission mode.

According to the embodiments of the present disclosure, in the SFN transmission mode, based on the first indication field in the DCI, a single-TRP PUSCH transmission is performed or a multi-TRP PUSCH transmission in a SFN transmission mode is performed. This allows for dynamic switching between the single-TRP and multi-TRP modes, making it more suitable for different terminals.

According to some implementations, in the PUSCH method of the embodiments of the present disclosure, the maximum number of transmission layers corresponding to the SFN transmission mode may be greater than two. When the maximum number of transmission layers corresponding to the SFN transmission mode is greater than two, the indication method of the first indication field when the maximum number of transmission layers corresponding to the SFN transmission mode is the same as the maximum number of transmission layers corresponding to the single-TRP mode may be referred to in the above embodiment(s), and the present disclosure will not elaborate further.

It should be noted, those skilled in the art will appreciate that the various embodiments/implementations of the present embodiment described above may be used in conjunction with the aforementioned embodiments or independently. Whether used independently or in conjunction with the aforementioned embodiments, the implementation principles are similar. In the implementations of the present disclosure, some embodiments are described using implementations that are used together. It shall be noted, those skilled in the art will understand that such examples do not limit the embodiments of the present disclosure.

It is understood that some aspects of the PUSCH transmission process performed by the network device in the embodiments of the present disclosure are similar to those performed by the terminal. These embodiments will not be described in detail here. For details that are not fully described, reference may be made to the communication process for PUSCH transmission at the terminal side.

It is further understood that the PUSCH transmission method provided by the embodiments of the present disclosure is applicable to the communication between the terminal and the network device. During the PUSCH transmission process performed by the terminal and the network device, the terminal implements the terminal functions described in the above embodiment(s), and the network device implements the network device functions described in the above embodiment(s). For details, reference may be made to the relevant description of the above embodiment(s) and will not be described in detail here.

Based on the same concept, the embodiments of the present disclosure also provide a communication apparatus.

It is understood that, to implement the aforementioned functions, the communication device provided in the embodiments of the present disclosure includes hardware structures and/or software modules corresponding to each function. In combination with the units and algorithm steps in the various examples disclosed by the embodiments of the present disclosure, the embodiments of the present disclosure may be implemented in hardware or a combination of hardware and computer software. Whether a function is implemented in hardware or by computer software driving hardware depends on the specific application and design constraints of the technical solution. Those skilled in the art may use different methods to implement the described functions for each specific application, but such implementation should not be considered to exceed the scope of the technical solution in the embodiments of the present disclosure.

Fig. 9 is a block diagram of an apparatus 200 for PUSCH transmission according to an examole embodiment.

As shown in Fig. 9, the apparatus includes a processing unit 201 and a transceiving unit 202.

The processing unit 201 is configured to determine that a PUSCH configuration uses a single frequency network (SFN) transmission mode.

The transceiving unit 202 is configured to: based on the first indication field for SRS in the downlink control information (DCI), perform a single-transmission reception point (TRP) PUSCH transmission or a multi-TRP PUSCH transmission in the SFN transmission mode.

The single-TRP PUSCH transmission indicates a PUSCH transmission directed to a single TRP via a single antenna panel. The multi-TRP PUSCH transmission in the SFN transmission mode indicates a PUSCH transmission directed to different TRPs respectively via multiple antenna panels in the SFN transmission mode. The first indication field is used to indicate the association between the second indication field and the SRS resource set in the SFN transmission mode, and to indicate the association between the second indication field and the TRP and/or the transmission configuration indicator (TCI) state in the SFN transmission mode.

In an embodiment, the second indication field includes a first resource indication field, and the SRS resource set includes a first SRS resource set and a second SRS resource set. The maximum number of transmission layers corresponding to the single-TRP mode is the same as the maximum number of transmission layers corresponding to the SFN transmission mode. The first SRS resource set or the second SRS resource set is associated with the first resource indication field.

In an embodiment, the codepoint corresponding to the first indication field is used to indicate the association between the second indication field and the SRS resource set, and to indicate the association between the second indication field and the TRP and/or the TCI state in the SFN transmission mode.

In an embodiment, the TRP includes a first TRP and a second TRP, and the TCI state includes a first TCI state and a second TCI state. The codepoint is used to indicate at least one of the following associations.

The codepoint is a first codepoint, indicating that the first resource indication field is associated with the first SRS resource set, and that the first resource indication field is associated with the first TPR and/or the first TCI state.

The codepoint is a second codepoint, indicating that the first resource indication field is associated with the second SRS resource set, and that the first resource indication field is associated with the second TPR and/or the second TCI state.

The codepoint is a third codepoint, indicating that the first resource indication field is associated with the first SRS resource set, and that the first resource indication field is associated with the first TPR and/or the first TCI state, and that the second resource indication field is associated with the second SRS resource set, and that the first resource indication field is associated with the second TPR and/or the second TCI state.

The codepoint is a fourth codepoint, which is a reserved codepoint.

In an embodiment, the TRP includes a first TRP and a second TRP, and the TCI state includes a first TCI state and a second TCI state. The codepoint is used to indicate at least one of the following associations.

The codepoint is a first codepoint, indicating that the first resource indication field is associated with the first SRS resource set, and that the first resource indication field is associated with the first TPR and/or the first TCI state.

The codepoint is a second codepoint, indicating that the first resource indication field is associated with the second SRS resource set, and that the first resource indication field is associated with the second TRP and/or the second TCI state.

The codepoint is a third codepoint, indicating that the first resource indication field is associated with the first SRS resource set, and that the first resource indication field is associated with the first TPR and/or the first TCI state, and that the second resource indication field is associated with the second SRS resource set, and that the second resource indication field is associated with the second TRP and/or the second TCI state.

The codepoint is a fourth codepoint, indicating that the first resource indication field is associated with the first SRS resource set, and that the first resource indication field is associated with the second TPR and/or the second TCI state, and that the second resource indication field is associated with the second SRS resource set, and that the second resource indication field is associated with the first TRP and/or the first TCI state.

In an embodiment, the number of SRS resources corresponding to the first SRS resource set is greater than or equal to the number of SRS resources corresponding to the second SRS resource set.

In an embodiment, the second indication field includes a first resource indication field and a second resource indication field, and the SRS resource set includes a first SRS resource set and a second SRS resource set. The maximum number of transmission layers corresponding to the single-TRP mode is different from the maximum number of transmission layers corresponding to the SFN transmission mode.

The first SRS resource set or the second SRS resource set is associated with the first resource indication field.

Alternatively, the first SRS resource set is associated with both the first resource indication field and the second resource indication field.

Alternatively, the second SRS resource set is associated with both the first resource indication field and the second resource indication field.

In an embodiment, the maximum number of transmission layers corresponding to the single-TRP mode and the maximum number of transmission layers corresponding to the SFN transmission mode are determined based on a preset rule or protocol specification.

Alternatively, the maximum number of transmission layers corresponding to the SFN transmission mode is determined based on the preset rule or protocol specification, and the maximum number of transmission layers corresponding to the single-TRP mode is the same as the maximum number of transmission layers corresponding to the SFN mode.

In an embodiment, the first SRS resource set or the second SRS resource set is associated with the first resource indication field.

The codepoint corresponding to the first resource indication field is adapted to the maximum number of transmission layers corresponding to the single-TRP mode and the maximum number of transmission layers corresponding to the SFN transmission mode.

In an embodiment, the maximum number of transmission layers corresponding to the SFN transmission mode is 2.

In an embodiment, the maximum number of transmission layers corresponding to the SFN transmission mode is greater than 2.

In an embodiment, when the PUSCH transmission is based on a non-codebook basis, the second indication field is a SRS Resource Indicator (SRI) indication field.

When the PUSCH transmission is based on a codebook basis, the second indication field is an SRI indication field and/or a Transmission Precoding Matrix Indicator (TPMI) indication field.

Fig. 10 is a block diagram of an apparatus 300 for PUSCH transmission according to an example embodiment.

As shown in Fig. 10, the apparatus includes a processing unit 301 and a transceiving unit 302.

The processing unit 301 is configured to determine that the PUSCH configuration uses a single frequency network (SFN) transmission mode.

The transceiving unit 302 is configured to perform single-transmission reception point (TRP) PUSCH reception or a multi-TRP PUSCH reception in the SFN transmission mode based on a first indication field in the downlink control information (DCI).

The single-TRP PUSCH reception refers to PUSCH reception directed to a single antenna panel via a single TRP, while the multi-TRP PUSCH reception in the SFN transmission mode refers to PUSCH reception directed to different TRPs respectively via multiple antenna panels in the SFN transmission mode. The first indication field is used to indicate the association between the second indication field and a sounding reference signal (SRS) resource set in the SFN transmission mode, and to indicate the association between the second indication field and the TRP and/or the transmission configuration indicator (TCI) state in the SFN transmission mode.

In an embodiment, the second indication field includes the first resource indication field, and the SRS resource set includes a first SRS resource set and a second SRS resource set. The maximum number of transmission layers corresponding to the single-TRP mode is the same as the maximum number of transmission layers corresponding to the SFN transmission mode.

The first SRS resource set or the second SRS resource set is associated with the first resource indication field.

In an embodiment, the codepoint corresponding to the first indication field is used to indicate the association between the resource indication field and the SRS resource set, and to indicate the association between the second indication field and the TRP and/or the TCI state in the SFN transmission mode.

In an embodiment, the TRP includes a first TRP and a second TRP, and the TCI state includes a first TCI state and a second TCI state. The codepoint is used to indicate at least one of the following associations.

The codepoint is a first codepoint, indicating that the first resource indication field is associated with the first SRS resource set, and that the first resource indication field is associated with the first TPR and/or the first TCI state.

The codepoint is a second codepoint, indicating that the first resource indication field is associated with the second SRS resource set, and that the first resource indication field is associated with the second TPR and/or the second TCI state.

The codepoint is a third codepoint, indicating that the first resource indication field is associated with the first SRS resource set, that the first resource indication field is associated with the first TPR and/or the first TCI state, that the second resource indication field is associated with the second SRS resource set, and that the first resource indication field is associated with the second TPR and/or the second TCI state.

The codepoint is a fourth codepoint, which is a reserved codepoint.

In an embodiment, the TRP includes a first TRP and a second TRP, and the TCI state includes a first TCI state and a second TCI state. The codepoint is used to indicate at least one of the following associations.

The codepoint is a first codepoint, indicating that the first resource indication field is associated with the first SRS resource set, and that the first resource indication field is associated with the first TPR and/or the first TCI state.

The codepoint is a second codepoint, indicating that the first resource indication field is associated with the second SRS resource set, and that the first resource indication field is associated with the second TRP and/or the second TCI state.

The codepoint is a third codepoint, indicating that the first resource indication field is associated with the first SRS resource set, that the first resource indication field is associated with the first TPR and/or the first TCI state, that the second resource indication field is associated with the second SRS resource set, and that the second resource indication field is associated with the second TRP and/or the second TCI state.

The codepoint is a fourth codepoint, indicating that the first resource indication field is associated with the first SRS resource set, that the first resource indication field is associated with the second TPR and/or the second TCI state, that the second resource indication field is associated with the second SRS resource set, and that the second resource indication field is associated with the first TRP and/or the first TCI state.

In an embodiment, the number of SRS resources corresponding to the first SRS resource set is greater than or equal to the number of SRS resources corresponding to the second SRS resource set.

In an embodiment, the indication field includes a first resource indication field and a second resource indication field, and the SRS resource set includes a first SRS resource set and a second SRS resource set. The maximum number of transmission layers corresponding to the single-TRP mode is different from the maximum number of transmission layers corresponding to the SFN transmission mode.

The first SRS resource set or the second SRS resource set is associated with the first resource indication field.

Alternatively, the first SRS resource set is associated with both the first resource indication field and the second resource indication field.

Alternatively, the second SRS resource set is associated with both the first resource indication field and the second resource indication field.

In an embodiment, the maximum number of transmission layers corresponding to the single-TRP mode and the maximum number of transmission layers corresponding to the SFN transmission mode are determined based on a preset rule or protocol specification.

Alternatively, the maximum number of transmission layers corresponding to the SFN transmission mode is determined based on a preset rule or protocol specification, and the maximum number of transmission layers corresponding to the single-TRP mode and the maximum number of transmission layers corresponding to the SFN transmission mode are the same.

In an embodiment, the first SRS resource set or the second SRS resource set is associated with the first resource indication field.

The codepoint corresponding to the first resource indication field is adapted to the maximum number of transmission layers corresponding to the single-TRP mode and the maximum number of transmission layers corresponding to the SFN transmission mode.

In an embodiment, the maximum number of transmission layers corresponding to the SFN transmission mode is 2.

In an embodiment, the maximum number of transmission layers corresponding to the SFN transmission mode is greater than two.

In an embodiment, when the PUSCH transmission is based on a non-codebook basis, the second indication field is a SRS Resource Indicator (SRI) indication field.

When the PUSCH transmission is based on a codebook basis, the second indication field is an SRI indication field and/or a Transmission Precoding Matrix Indicator (TPMI) indication field.

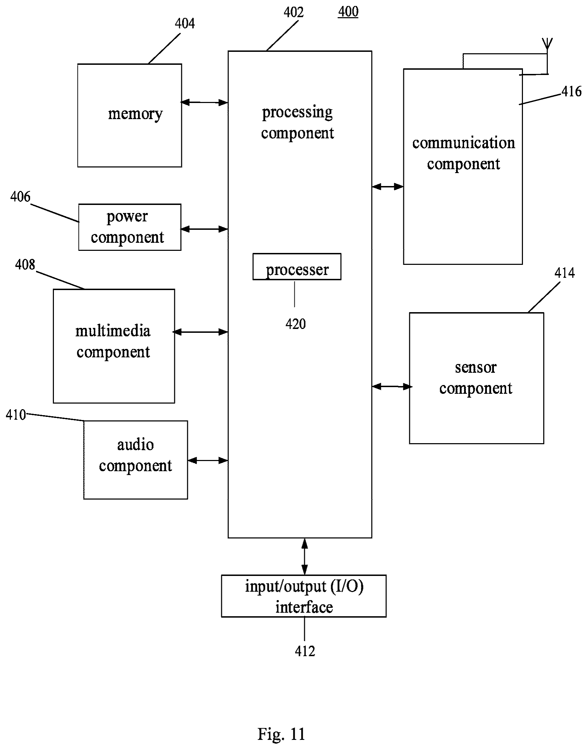

Fig. 11 is a block diagram of a device 400 for PUSCH transmission according to an example embodiment. For example, the device 400 may be any terminal, such as a mobile phone, a computer, a digital broadcast terminal, a messaging device, a game console, a tablet device, a medical device, a fitness device, a personal digital assistant, or the like.

Referring to Fig. 11, the device 400 may include one or more of the following components: a processing component 402, a memory 404, a power component 406, a multimedia component 408, an audio component 410, an input/output (I/O) interface 412, a sensor component 414, and a communication component 416.

The processing component 402 generally controls the overall operation of the device 400, such as operations associated with display, phone calls, data communications, camera operation, and recording operation. The processing component 402 may include one or more processors 420 to execute instructions to perform all or some of the steps of the aforementioned method(s). Furthermore, the processing component 402 may include one or more modules to facilitate interaction between the processing component 402 and other components. For example, the processing component 402 may include a multimedia module to facilitate interaction between the multimedia component 408 and the processing component 402.

The memory 404 is configured to store various types of data to support the operations on the device 400. Examples of such data include instructions for any application or method operating on the device 400, contact data, phonebook data, messages, images, videos, etc. The memory 404 may be implemented by any type of volatile or non-volatile memory device, or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk.

The power component 406 provides power to the various components of the device 400. The power component 406 may include a power management system, one or more power supplies, and other components associated with generating, managing, and distributing power for the device 400.

The multimedia component 408 includes a screen that provides an output interface between the device 400 and the user. In some embodiments, the screen may include a liquid crystal display (LCD) and a touch panel (TP). If the screen includes a touch panel, it may be implemented as a touch screen to receive input signals from the user. The touch panel includes one or more touch sensors to sense touches, swipes, and gestures on the touch panel. The touch sensor may not only sense the boundaries of a touch or swipe action, but also the duration and pressure associated with the touch or swipe action. In some embodiments, the multimedia component 408 includes a front camera and/or a rear camera. When the device 400 is in an operating mode, such as a capture mode or a video mode, the front camera and/or the rear camera may receive external multimedia data. Each of the front and rear cameras may be a fixed optical lens system or have variable focus and optical zoom capability.

The audio component 410 is configured to output and/or input audio signals. For example, the audio component 410 includes a microphone (MIC), which is configured to receive external audio signals when the device 400 is in an operating mode, such as call mode, recording mode, and voice recognition mode. The received audio signals may be further stored in the memory 404 or transmitted via the communication component 416. In some embodiments, the audio component 410 also includes a speaker for outputting audio signals.

The I/O interface 412 provides an interface between the processing component 402 and peripheral interface modules, such as a keyboard, click wheel, buttons, etc. These buttons may include, but are not limited to, a home button, a volume button, a start button, and a lock button.

The sensor component 414 includes one or more sensors for providing status assessments of various aspects of the device 400. For example, the sensor component 414 may detect the on/off state of the device 400, the relative positioning of components such as display and keypad of the device 400, changes in position of the device 400 or a component of the device 400, the presence or absence of user contact with the device 400, the orientation or acceleration/deceleration of the device 400, and changes in temperature of the device 400. The sensor assembly 414 may include a proximity sensor configured to detect the presence of nearby objects without any physical contact. The sensor component 414 may also include an optical sensor, such as a CMOS or CCD image sensor, for use in imaging applications. In some embodiments, the sensor component 414 may also include an accelerometer, a gyroscope, a magnetic sensor, a pressure sensor, or a temperature sensor.

The communication component 416 is configured to facilitate wired or wireless communication between the device 400 and other devices. The device 400 may access a wireless network based on a communication standard, such as WiFi, 2G, or 3G, or a combination thereof. In an example embodiment, the communication component 416 receives broadcast signals or broadcast-related information from an external broadcast management system via a broadcast channel. In an example embodiment, the communication component 416 also includes a near-field communication (NFC) module to facilitate short-range communication. For example, the NFC module may be implemented based on radio frequency identification (RFID), infrared data association (IrDA), ultra-wideband (UWB), Bluetooth (BT), or other technologies.

In an example embodiment, the device 400 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components to perform the aforementioned method(s).

In an example embodiment, a non-transitory computer-readable storage medium including instructions is also provided, such as memory 404 including instructions. The instructions are executable by the processor 420 of the device 400 to perform the aforementioned method(s). For example, the non-transitory computer-readable storage medium may be ROM, random access memory (RAM), CD-ROM, magnetic tape, floppy disk, or optical data storage device.

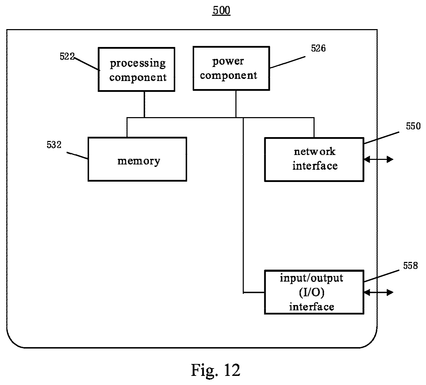

Fig. 12 is a schematic diagram of another device for PUSCH transmission according to an example embodiment. For example, the device 500 may be provided as a base station or a server. Referring to Fig. 12, the device 500 includes a processing component 522, which further includes one or more processors, and memory resources represented by the memory 532 for storing instructions, such as an application program, executable by the processing component 522. The application program stored in the memory 532 may include one or more modules, each corresponding to a set of instructions. Furthermore, the processing component 522 is configured to execute instructions to perform the aforementioned method(s).

The device 500 may also include: a power component 526 configured to perform power management for the device 500; a wired or wireless network interface 550 configured to connect the device 500 to a network; and an input/output (I/O) interface 558. The device 500 may operate based on an operation system stored in the memory 532, such as Windows Server™, Mac OS X™, Unix™, Linux™, FreeBSD™, or the like.

It should be further understood that in the present disclosure, "multiple" refers to two or more, and other quantifiers are similar, and "and/or" describes an association relationship between associated objects, indicating that three possible relationships exist. For example, "A and/or B" may mean: A exists alone, A and B exist simultaneously, or B exists alone. The character "/" generally indicates that the associated objects are in an "or" relationship. The singular forms "a," "the," and "said" are intended to include the plural forms unless the context clearly indicates otherwise.

It should be further understood that the terms "first," "second," and the like are used to describe various types of information, but these information should not be limited to these terms. These terms are used solely to distinguish information of the same type from one another and do not imply a specific order or level of importance. In fact, the terms "first," "second," and the like are fully interchangeable. For example, the first information may be referred to as the second information, and similarly, the second information may be referred to as the first information, without departing from the scope of the present disclosure.

It should be further understood that the meaning of terms such as "in response to" and "if" used in the present disclosure depends on the context and the actual usage scenario. For example, the term "in response to" as used herein may be interpreted as "when", "while", "if" or "in case."

It should be further understood that although operations are depicted in a particular order in the figures in the embodiments of the present disclosure, this should not be construed as requiring that the operations be performed in the particular order shown, or in a serial order, or that all illustrated operations be performed to achieve the desired result. In certain circumstances, multitasking and parallel processing may be advantageous.

Other embodiments of the present disclosure will readily occur to those skilled in the art after consideration of the specification and practice of the content disclosed herein. The present application is intended to cover any variations, uses, or adaptations of the present disclosure that follow the general principles of the present disclosure and include common knowledge or customary techniques in the art not disclosed herein.

It should be understood that the present disclosure is not limited to the precise configurations described above and illustrated in the accompanying drawings and that various modifications and variations are possible without departing from the scope of the present disclosure. The scope of the present disclosure is limited solely by the appended claims.

## Claims

1. A physical uplink shared channel (PUSCH) transmission method, wherein the method is performed by a terminal, the terminal supports simultaneous uplink transmission with multiple antenna panels (STxMPs), and the method comprises:

   determining that a PUSCH configuration uses a single frequency network (SFN) transmission mode; and
   based on a first indication field in downlink control information (DCI), performing a single-transmission reception point (TRP) PUSCH transmission or a multi-TRP PUSCH transmission in the SFN transmission mode, wherein the single-TRP PUSCH transmission comprises a PUSCH transmission directed to a single TRP via a single antenna panel,
   the multi-TRP PUSCH transmission in the SFN transmission mode comprises a PUSCH transmission directed to different TRPs respectively via multiple antenna panels in the SFN transmission mode, and
   the first indication field is used to indicate an association between a second indication field and a sounding reference signal (SRS) resource set in the SFN transmission mode, and an association between the second indication field and at least one of a TRP or a transmission configuration indicator (TCI) state in the SFN transmission mode.

2. The method according to claim 1, wherein the second indication field comprises a first resource indication field, the SRS resource set comprises a first SRS resource set and a second SRS resource set, the maximum number of transmission layers corresponding to the single-TRP mode is the same as the maximum number of transmission layers corresponding to the SFN transmission mode, and the first SRS resource set or the second SRS resource set is associated with the first resource indication field.

3. The method according to claim 2, wherein a codepoint corresponding to the first indication field is used to indicate an association between the second indication field and a SRS resource set, and an association between the second indication field and at least one of a TRP or a TCI state in the SFN transmission mode.

4. The method according to claim 3, wherein the TRP comprises at least one of a first TRP or a second TRP, the TCI state comprises at least one of a first TCI state or a second TCI state, and the codepoint is used to indicate at least one of the following associations:

   the codepoint is a first codepoint, indicating that the first resource indication field is associated with the first SRS resource set, and that the first resource indication field is associated with at least one of the first TPR or the first TCI state;
   the codepoint is a second codepoint, indicating that the first resource indication field is associated with the second SRS resource set, and that the first resource indication field is associated with at least one of the second TPR or the second TCI state;
   the codepoint is a third codepoint, indicating that the first resource indication field is associated with the first SRS resource set, that the first resource indication field is associated with at least one of the first TPR or the first TCI state, that the second resource indication field is associated with the second SRS resource set, and that the second resource indication field is associated with at least one of the second TPR or the second TCI state;
   the codepoint is a fourth codepoint, wherein the fourth codepoint is a reserved codepoint.

5. The method according to claim 3, wherein the TRP comprises a first TRP and a second TRP, the TCI state comprises a first TCI state and a second TCI state, and the codepoint is used to indicate at least one of the following associations:

   the codepoint is a first codepoint, indicating that the first resource indication field is associated with the first SRS resource set, and that the first resource indication field is associated with at least one of the first TRP or the first TCI state;

the codepoint is a second codepoint, indicating that the first resource indication field is associated with the second SRS resource set, and that the first resource indication field is associated with at least one of the second TRP or the second TCI state;

the codepoint is a third codepoint, indicating that the first resource indication field is associated with the first SRS resource set, that the first resource indication field is associated with at least one of the first TPR or the first TCI state, that the second resource indication field is associated with the second SRS resource set, and that the second resource indication field is associated with at least one of the second TRP or the second TCI state;

the codepoint is a fourth codepoint, indicating that the first resource indication field is associated with the first SRS resource set, that the first resource indication field is associated with at least one of the second TPR or the second TCI state, that the second resource indication field is associated with the second SRS resource set, and that the second resource indication field is associated with at least one of the first TRP or the first TCI state.

6. The method according to any one of claims 2 to 5, wherein the number of SRS resources corresponding to the first SRS resource set is greater than or equal to the number of SRS resources corresponding to the second SRS resource set.

7. The method according to claim 1, wherein the second indication field comprises a first resource indication field and a second resource indication field, the SRS resource set comprises the first SRS resource set and the second SRS resource set, and the maximum number of transmission layers corresponding to the single-TRP mode is different from the maximum number of transmission layers corresponding to the SFN transmission mode;

the first SRS resource set or the second SRS resource set is associated with the first resource indication field, or

the first SRS resource set is associated with both the first resource indication field and the second resource indication field, or

the second SRS resource set is associated with both the first resource indication field and the second resource indication field.

8. The method according to claim 2 or 7, wherein

the maximum number of transmission layers corresponding to the single-TRP mode and the maximum number of transmission layers corresponding to the SFN transmission mode are determined based on a preset rule or protocol specification; or

the maximum number of transmission layers corresponding to the SFN transmission mode is determined based on the preset rule or protocol specification, and the maximum number of transmission layers corresponding to the single-TRP mode is the same as the maximum number of transmission layers corresponding to the SFN transmission mode.

9. The method according to claim 7, wherein

the first SRS resource set or the second SRS resource set is associated with a first resource indication field;

a codepoint corresponding to the first resource indication field is adapted to the maximum number of transmission layers corresponding to the single-TRP mode and the maximum number of transmission layers corresponding to the SFN transmission mode.

10. The method according to any one of claims 2-9, wherein the maximum number of transmission layers corresponding to the SFN transmission mode is 2.

11. The method according to any one of claims 2-9, wherein the maximum number of transmission layers corresponding to the SFN transmission mode is greater than 2.

12. The method according to any one of claims 1-11, wherein

the PUSCH transmission is based on a non-codebook basis, and the second indication field is a SRS resource indicator (SRI) indication field;

the PUSCH transmission is based on a codebook basis, and the second indication field is at least one of the SRI indication field or a transmission precoding matrix indicator (TPMI) indication field.

13. A physical uplink shared channel (PUSCH) transmission method, wherein the method is performed by a network device, the network device supports simultaneous uplink transmission with multiple antenna panels (STxMPs), and the method comprises:

determining that a PUSCH configuration uses a single frequency network (SFN) transmission mode;
based on a first indication field in downlink control information (DCI), performing a single-transmission reception point (TRP) PUSCH reception or a multi-TRP PUSCH reception in the SFN transmission mode, wherein the single-TRP PUSCH reception comprises a PUSCH reception directed to a single antenna panel via a single TRP,
the multi-TRP PUSCH reception in the SFN transmission mode comprises a PUSCH reception directed to different TRPs respectively via multiple antenna panels in the SFN transmission mode, and
the first indication field is used to indicate an association between a second indication field and a sounding reference signal (SRS) resource set in the SFN transmission mode, and an association between the second indication field and at least one of a TRP or a transmission configuration indicator (TCI) state in the SFN transmission mode.

14. The method according to claim 13, wherein the second indication field comprises a first resource indication field, the SRS resource set comprises the first SRS resource set and the second SRS resource set, the maximum number of transmission layers corresponding to the single-TRP mode is the same as the maximum number of transmission layers corresponding to the SFN transmission mode, and the first SRS resource set or the second SRS resource set is associated with the first resource indication field.

15. The method according to claim 14, wherein a codepoint corresponding to the first indication field is used to indicate an association between the second indication field and a SRS resource set, and an association between the second indication field and at least one of a TRP or a TCI state in the SFN transmission mode.

16. The method according to claim 15, wherein the TRP comprises a first TRP and a second TRP, the TCI state comprises a first TCI state and a second TCI state, and the codepoint is used to indicate at least one of the following associations:

the codepoint is a first codepoint, indicating that the first resource indication field is associated with the first SRS resource set, and that the first resource indication field is associated with at least one of the first TPR or the first TCI state;
the codepoint is a second codepoint, indicating that the first resource indication field is associated with the second SRS resource set, and that the first resource indication field is associated with at least one of the second TPR or the second TCI state;
the codepoint is a third codepoint, indicating that the first resource indication field is associated with the first SRS resource set, that the first resource indication field is associated with at least one of the first TPR or the first TCI state, that the second resource indication field is associated with the second SRS resource set, and that the second resource indication field is associated with at least one of the second TPR or the second TCI state;
the codepoint is a fourth codepoint, wherein the fourth codepoint is a reserved codepoint.

17. The method according to claim 15, wherein the TRP comprises a first TRP and a second TRP, the TCI state comprises a first TCI state and a second TCI state, and the codepoint is used to indicate at least one of the following associations:

the codepoint is a first codepoint, indicating that the first resource indication field is associated with the first SRS resource set, and that the first resource indication field is associated with at least one of the first TPR or the first TCI state;
the codepoint is a second codepoint, indicating that the first resource indication field is associated with the second SRS resource set, and that the first resource indication field is associated with at least one of the second TRP or the second TCI state;
the codepoint is a third codepoint, indicating that the first resource indication field is associated with the first SRS resource set, that the first resource indication field is associated with at least one of the first TPR or the first TCI state, that the second resource indication field is associated with the second SRS resource set, and that the second resource indication field is associated with at least one of the second TRP or the second TCI state;
the codepoint is a fourth codepoint, indicating that the first resource indication field is associated with the first SRS resource set, that the first resource indication field is associated with at least one of the second TPR or the second TCI state, that the second resource indication field is associated with the second SRS resource set, and that the second resource indication field is associated with at least one of the first TRP or the first TCI state.

18. The method according to any one of claims 14 to 17, wherein the number of SRS resources corresponding to the first SRS resource set is greater than or equal to the number of SRS resources corresponding to the second SRS resource set.

19. The method according to claim 13, wherein the second indication field comprises a first resource indication field and a second resource indication field, the SRS resource set comprises the first SRS resource set and the second SRS resource set, and the maximum number of transmission layers corresponding to the single-TRP mode is different from the maximum number of transmission layers corresponding to the SFN transmission mode;

the first SRS resource set or the second SRS resource set is associated with the first resource indication field, or the first SRS resource set is associated with both the first resource indication field and the second resource indication field, or the second SRS resource set is associated with both the first resource indication field and the second resource indication field.

20. The method according to claim 14 or 19, wherein

the maximum number of transmission layers corresponding to the single-TRP mode and the maximum number of transmission layers corresponding to the SFN transmission mode are determined based on a preset rule or protocol specification; or the maximum number of transmission layers corresponding to the SFN transmission mode is determined based on the preset rule or protocol specification, and the maximum number of transmission layers corresponding to the single-TRP mode is the same as the maximum number of transmission layers corresponding to the SFN transmission mode.

21. The method according to claim 19, wherein

the first SRS resource set or the second SRS resource set is associated with a first resource indication field; the codepoint corresponding to the first resource indication field is adapted to the maximum number of transmission layers corresponding to the single-TRP mode and the maximum number of transmission layers corresponding to the SFN transmission mode.

22. The method according to any one of claims 14-21, wherein the maximum number of transmission layers corresponding to the SFN transmission mode is 2.

23. The method according to any one of claims 14-21, wherein the maximum number of transmission layers corresponding to the SFN transmission mode is greater than 2.

24. The method according to any one of claims 14-23, wherein

the PUSCH reception is based on a non-codebook basis, and the second indication field is a SRS Resource Indicator (SRI) indication field; the PUSCH reception is based on a codebook basis, and the second indication field is at least one of the SRI indication field or a transmission precoding matrix indicator (TPMI) indication field.

25. A communications apparatus, comprising:

a processing unit, configured to determine that a PUSCH configuration uses a single frequency network (SFN) transmission mode; a transceiving unit, configured to perform a single-transmission reception point (TRP) PUSCH transmission or a multi-TRP PUSCH transmission in the SFN transmission mode, based on a first indication field for SRS in downlink control information (DCI), wherein the single-TRP PUSCH transmission comprises a PUSCH transmission directed to a single TRP via a single antenna panel, the multi-TRP PUSCH transmission in the SFN transmission mode comprises a PUSCH transmission directed to different TRPs respectively via multiple antenna panels in the SFN transmission mode, and the first indication field is used to indicate an association between a second indication field and a sounding reference signal (SRS) resource set in the SFN transmission mode, and an association between the second indication field and at least one of a TRP or a transmission configuration indicator (TCI) state in the SFN transmission mode.

26. A communications apparatus, comprising:

a processing unit, configured to determine that a PUSCH configuration uses a single frequency network (SFN) transmission mode; and
a transceiving unit, configured to perform a single-transmission reception point (TRP) PUSCH reception or a multi-TRP PUSCH reception in the SFN transmission mode, based on a first indication field in downlink control information (DCI), wherein
the single-TRP PUSCH reception comprises a PUSCH reception directed to a single antenna panel via a single TRP,
the multi-TRP PUSCH reception in the SFN transmission mode comprises a PUSCH reception directed to different TRPs respectively via multiple antenna panels in the SFN transmission mode, and
the first indication field is used to indicate an association between a second indication field and a sounding reference signal (SRS) resource set in the SFN transmission mode, and an association between the second indication field and at least one of a TRP or a transmission configuration indicator (TCI) state in the SFN transmission mode.

27. A communication device, comprising:

a processor; and
a memory for storing instructions being executable by the processor,
wherein the processor is configured to call the instructions stored in the memory to perform the method according to any one of claims 1 to 24.

28. A communication system, comprising a terminal and a network device, wherein the terminal is configured to perform the PUSCH transmission method according to any one of claims 1 to 12, and the network device is configured to perform the method according to any one of claims 13 to 24.

29. A storage medium, comprising instructions stored therein, wherein

the instructions, when executed by a processor of a terminal, enable the terminal to perform the method according to any one of claims 1 to 12; or
the instructions, when executed by a processor of a network device, enable the network device to perform the method according to any one of claims 13 to 24.

<u>100</u>

110

120

Fig. 1

TPMI1
one or more
data layers

antenna
panel 1

TPMI2
one or more
data layers

antenna
panel 2

UE

TRP 1

TRP 2

Fig. 2

PDCCH 1

PUSCH 1

PDCCH 2

PUSCH 2

antenna
panel 1

antenna
panel 2

TRP 1

TRP 2

UE

Fig. 3

TP1 □ data layer 1-4        TP2 □

TP1 □ data layer 1-4        data layer 1-4 □ TP2

TP1 □ data layer 1-2        data layer 3-4 □ TP2

Fig. 4

S11
┌─────────────────────────────────────────────┐
│ determining that the PUSCH configuration uses a │
│ single frequency network (SFN) transmission mode │
└─────────────────────────────────────────────┘

                    ↓

S12
┌─────────────────────────────────────────────┐
│ based on the first indication field in the DCI, │
│ performing a single-TRP PUSCH transmission or a │
│ multi-TRP PUSCH transmission in the SFN │
│ transmission mode │
└─────────────────────────────────────────────┘

Fig. 5

S21
┌─────────────────────────────────────────────┐
│ determining that the PUSCH configuration uses a │
│ single frequency network (SFN) transmission mode │
└─────────────────────────────────────────────┘

                    ↓

S22
┌─────────────────────────────────────────────┐
│ based on the association between the first SRS │
│ resource set or the second SRS resource set and the │
│ first resource indication field, performing a single-TRP │
│ PUSCH transmission or a multi-TRP PUSCH │
│ transmission in the SFN transmission mode │
└─────────────────────────────────────────────┘

Fig. 6

S31

| determining that the PUSCH configuration uses a single frequency network (SFN) transmission mode |

↓

S32

| based on the first indication field in the DCI, performing a single-TRP PUSCH reception or a multi-TRP PUSCH reception in the SFN transmission mode |

Fig. 7

S41

| determining that the PUSCH configuration uses a single frequency network (SFN) transmission mode |

↓

S42

| based on the association between the first SRS resource set or the second SRS resource set and the first resource indication field, performing a single-TRP PUSCH reception or a multi-TRP PUSCH reception in the SFN transmission mode |

Fig. 8

<u>200</u>

| processing unit | 201

| transceiving unit | 202

Fig. 9

<u>300</u>

| processing unit | 301

| transceiving unit | 302

Fig. 10

Fig. 11

<u>500</u>

Fig. 12

## INTERNATIONAL SEARCH REPORT

| International application No. |
|---|
| **PCT/CN2023/076985** |

| A. | CLASSIFICATION OF SUBJECT MATTER |
|---|---|

H04W 72/21(2023.01)i

According to International Patent Classification (IPC) or to both national classification and IPC

| B. | FIELDS SEARCHED |
|---|---|

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

3GPP, CNTXT, DWPI, ENTXT, ENTXTC: 单, 多, TRP, 控制, DCI, SFN, SRS, 资源集, 天线, 面板, 切换, 动态, 码点, 码, SRI, TCI, PUSCH, single, multi+, switch+, dynamic+, antenna?, panel?, codebook, STxMP

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2022205229 A1 (BEIJING XIAOMI MOBILE SOFTWARE CO., LTD.) 06 October 2022 (2022-10-06) <br> description, pages 13-20 | 1-29 |
| X | WO 2022205233 A1 (BEIJING XIAOMI MOBILE SOFTWARE CO., LTD.) 06 October 2022 (2022-10-06) <br> description, pages 8-18 | 1-29 |
| A | CN 115134055 A (BEIJING UNISOC COMMUNICATIONS TECHNOLOGY CO., LTD.) 30 September 2022 (2022-09-30) <br> entire document | 1-29 |
| A | WO 2023011352 A1 (VIVO MOBILE COMMUNICATION CO., LTD.) 09 February 2023 (2023-02-09) <br> entire document | 1-29 |
| A | CAICT. "Enhancements on Multi-TRP for Uplink Channels" <br> *3GPP TSG RAN WG1 #105-e, R1-2104841*, 27 May 2021 (2021-05-27), <br> entire document | 1-29 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 October 2023** | **19 October 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/076985**

| Patent document cited in search report | | | Publication date (day/month/year) | Patent family member(s) | | | Publication date (day/month/year) |
|---|---|---|---|---|---|---|---|
| WO | 2022205229 | A1 | 06 October 2022 | CN | 115486184 | A | 16 December 2022 |
| WO | 2022205233 | A1 | 06 October 2022 | None | | | |
| CN | 115134055 | A | 30 September 2022 | WO | 2022199346 | A1 | 29 September 2022 |
| WO | 2023011352 | A1 | 09 February 2023 | None | | | |

Form PCT/ISA/210 (patent family annex) (July 2022)